# EUROPEAN PATENT APPLICATION

(11) **EP 3 992 768 A1**
(43) Date of publication of application: **04.05.2022**
(21) Application number: 19958385.7
(22) Date of filing: 30.12.2019
(51) Int. Cl.: G06F 3/0488

(54) **HUMAN-COMPUTER INTERACTION METHOD, DEVICE, AND SYSTEM**

(71) Applicant: Huawei Technologies Co., Ltd., Longgang District Shenzhen, Guangdong 518129 (CN)
(72) Inventor: ZHAO, Guangyao, Shenzhen, Guangdong 518129 (CN)
(74) Representative: Kreuz, Georg Maria
(86) International application number: PCT/CN2019/130195
(87) International publication number: WO 2021/134358

(57) **Abstract**

This application discloses a human-computer interaction method, apparatus, and system, and relates to the field of human-computer interaction technologies. This application helps implement multimodality human-computer interaction and enhance user experience. The human-computer interaction method is applied to a human-computer interaction system, and the human-computer interaction system includes a touchscreen. The human-computer interaction method includes: receiving a first touch operation and a second touch operation that have overlapping touch duration; receiving a voice instruction, where the voice instruction is a voice instruction received within the overlapping touch duration of the first touch operation and the second touch operation; in response to the first touch operation and the second touch operation, determining location information of a to-be-operated object of the voice instruction on the touchscreen; and executing the voice instruction based on the location information of the to-be-operated object on the touchscreen.

## Description

### TECHNICAL FIELD

This application relates to the field of human-computer interaction technologies, and in particular, to a human-computer interaction method, apparatus, and system.

### BACKGROUND

Human-computer interaction (human computer interaction, HCI; or human machine interaction, HMI) is knowledge for studying an interactive relationship between a system and a user. The system herein may refer to a variety of machines, or a computerized system and computerized software. Generally, multimodal (modality) human-computer interaction refers to human-computer interaction that integrates a plurality of senses. Multimodality interaction means performing human-computer interaction in a plurality of manners such as a manner of a text, a manner of a voice, a manner of vision, a manner of an action, and a manner of an environment. How to implement multimodality human-computer interaction to enhance user experience is a technical problem that urgently needs to be resolved.

### SUMMARY

A human-computer interaction method, apparatus, and system provided in this application helps implement multimodality human-computer interaction and enhance user experience.

To achieve the objectives, this application provides the following technical solutions.

According to a first aspect, this application provides a human-computer interaction method. The human-computer interaction method is applied to a human-computer interaction system, and the human-computer interaction system includes a touchscreen. The method includes: receiving a first touch operation and a second touch operation that have overlapping touch duration, and receiving a voice instruction, where the voice instruction is a voice instruction received within the overlapping touch duration of the first touch operation and the second touch operation; in response to the first touch operation and the second touch operation, determining location information of a to-be-operated object of the voice instruction on the touchscreen; and executing the voice instruction based on the determined location information of the to-be-operated object on the touchscreen. In this technical solution, on one hand, a to-be-executed voice instruction (namely, the voice instruction) is determined based on overlapping touch duration of multi-point touch. In this way, compared with a prior-art solution in which "a wake-up word needs to be frequently used to wake up the human-computer interaction system, so that the to-be-executed voice instruction can be determined based on the wake-up human-computer interaction system", in this technical solution, there is no need to frequently use the wake-up word to wake up the system. This helps enhance user experience in a human-computer interaction process. On the other hand, location information of a to-be-operated object of the to-be-executed voice instruction on the touchscreen is determined based on the multi-point touch. In this way, in a large-screen scenario, a problem of long-distance sliding on a large screen can be alleviated. This helps enhance user experience in the human-computer interaction process.

With reference to the first aspect, in a possible design, a distance between a contact point of the first touch operation and a contact point of the second touch operation is greater than or equal to a preset threshold. In other words, the human-computer interaction method provided in this application may be applied to the large-screen scenario. A plurality of touch operations are used in the large-screen scenario to trigger a voice monitoring instruction, so that the problem of long-distance sliding on the large screen can be effectively alleviated, and user experience in the human-computer interaction process can be enhanced.

With reference to the first aspect, in another possible design, the "determining location information of a to-be-operated object of the voice instruction on the touchscreen" may include determining a to-be-operated area of the voice instruction on the touchscreen, where the to-be-operated object is included in the to-be-operated area. In this case, the "executing the voice instruction based on the determined location information of the to-be-operated object on the touchscreen" may include determining the to-be-operated area on the touchscreen based on content of the received voice instruction, and executing the voice instruction in the to-be-operated area.

With reference to the first aspect, in another possible design, the "executing the voice instruction in the to-be-operated area" may include: when the voice instruction is used to indicate to select an object, selecting an object in the to-be-operated area; when the voice instruction is used to indicate to modify attribute information of an object to target attribute information, modifying attribute information of an object in the to-be-operated area to the target attribute information; when the voice instruction is used to indicate to delete an object, deleting an object in the to-be-operated area; or when the voice instruction is used to indicate to create an object, creating an object in the to-be-operated area. This possible design provides several examples in which the human-computer interaction system executes the voice instruction.

With reference to the first aspect, in another possible design, the human-computer interaction method may further include: The human-computer interaction system further displays the determined to-be-operated area on the touchscreen. In this way, the to-be-operated area is displayed on the touchscreen, so that a process in which the human-computer interaction system executes the voice instruction is visualized, and user experience is enhanced.

With reference to the first aspect, in another possible design, if the voice instruction is used to indicate to create the to-be-operated object that includes a first endpoint and a second endpoint, the "determining location information of a to-be-operated object of the voice instruction on the touchscreen" may include: determining location information of the first endpoint on the touchscreen based on location information of the contact point of the first touch operation, and determining location information of the second endpoint on the touchscreen based on location information of the contact point of the second touch operation. In this implementation, the location information of the contact point of the touch operation may be used to determine a location of the to-be-operated object that is created according to the voice instruction. In other words, the location information of the contact point of the touch operation may be used as a parameter of the voice instruction.

With reference to the first aspect, in another possible design, the to-be-operated object includes at least one of the following: a straight line, a line segment, a broken line, a curve, or a polygon. In other words, the human-computer interaction system in this application may create, according to the method, the to-be-operated object including the first endpoint and the second endpoint, for example, the straight line, the line segment, the broken line, the curve, or the polygon.

With reference to the first aspect, in another possible design, the "executing the voice instruction based on the determined location information of the to-be-operated object on the touchscreen" may include: executing the voice instruction based on the location information of the to-be-operated object on the touchscreen and a sequence of touch start times of the first touch operation and the second touch operation. In this implementation, the sequence of the touch start times of the first touch operation and the second touch operation may be used as a parameter of the voice instruction.

With reference to the first aspect, in another possible design, the "executing the voice instruction based on the location information of the to-be-operated object on the touchscreen and a sequence of touch start times of the first touch operation and the second touch operation" may include: when the voice instruction is used to indicate to create a circle, creating the circle based on the sequence of the touch start times of the first touch operation and the second touch operation. A location of a center of the circle is determined based on a location of the contact point of the first touch operation, and a location of a point in a circumference of the circle is determined based on a location of the contact point of the second touch operation. The touch start time of the first touch operation is earlier or later than the touch start time of the second touch operation. In this implementation, the sequence of the touch start times of the first touch operation and the second touch operation is used as a parameter of the voice instruction for creating the circle.

With reference to the first aspect, in another possible design, the "executing the voice instruction based on the location information of the to-be-operated object on the touchscreen and a sequence of touch start times of the first touch operation and the second touch operation" may include: when the voice instruction is used to indicate to create a line with a unidirectional arrow, creating the line with a unidirectional arrow based on the sequence of the touch start times of the first touch operation and the second touch operation. Herein, a location of an endpoint pointed to by the arrow in the line is determined based on a location of the contact point of the first touch operation, and a location of an endpoint not pointed to by the arrow in the line is determined based on a location of the contact point of the second touch operation. The touch start time of the first touch operation is earlier or later than the touch start time of the second touch operation. In this implementation, the sequence of the touch start times of the first touch operation and the second touch operation is used as a parameter of the voice instruction for creating the line with a unidirectional arrow.

According to a second aspect, this application provides a human-computer interaction method, where the human-computer interaction method is applied to a computer device. The human-computer interaction method includes: obtaining location information of a first contact point based on a first touch operation and location information of a second contact point based on a second touch operation, where the first touch operation and the second touch operation have overlapping touch duration; receiving a voice instruction, where the voice instruction is a voice instruction received within the overlapping touch duration of the first touch operation and the second touch operation; in response to the obtaining operation, determining location information of a to-be-operated object of the voice instruction, where the location information of the to-be-operated object is location information of the to-be-operated object on a touchscreen in a human-computer interaction system, and the touchscreen may be integrated into the computer device, or may be disposed separately from the computer device; and executing the voice instruction based on the location information of the to-be-operated object.

With reference to the second aspect, in a possible design, a distance between the contact point of the first touch operation and the contact point of the second touch operation is greater than or equal to a preset threshold.

With reference to the second aspect, in another possible design, the "determining location information of a to-be-operated object of the voice instruction" includes determining a to-be-operated area of the voice instruction, where the to-be-operated object is included in the to-be-operated area. In this case, the "executing the gauge voice instruction based on the location information of the to-be-operated object" includes executing the voice instruction in the to-be-operated area.

With reference to the second aspect, in another possible design, the "executing the voice instruction in the to-be-operated area" includes: when the voice instruction is used to indicate to select an object, selecting an object in the to-be-operated area; when the voice instruction is used to indicate to modify attribute information of an object to target attribute information, modifying attribute information of an object in the to-be-operated area to the target attribute information; when the voice instruction is used to indicate to delete an object, deleting, by the computer device, an object in the to-be-operated area; or when the voice instruction is used to indicate to create an object, creating an object in the to-be-operated area.

With reference to the second aspect, in another possible design, if the voice instruction is used to indicate to create the to-be-operated object that includes a first endpoint and a second endpoint, the "determining location information of a to-be-operated object of the voice instruction" includes: determining location information of the first endpoint on the touchscreen based on the location information of the contact point of the first touch operation, and determining location information of the second endpoint on the touchscreen based on the location information of the contact point of the second touch operation.

With reference to the second aspect, in another possible design, the to-be-operated object includes at least one of the following: a straight line, a line segment, a broken line, a curve, or a polygon.

With reference to the second aspect, in another possible design, the "executing the voice instruction based on the location information of the to-be-operated object" includes executing the voice instruction based on the location information of the to-be-operated object on the touchscreen and a sequence of touch start times of the first touch operation and the second touch operation.

With reference to the second aspect, in another possible design, the "executing the voice instruction based on the location information of the to-be-operated object on the touchscreen and a sequence of touch start times of the first touch operation and the second touch operation" includes: When the voice instruction is used to indicate to create a circle, the computer device creates the circle based on the sequence of the touch start times of the first touch operation and the second touch operation. A location of a center of the circle is determined based on a location of the contact point of the first touch operation, and a location of a point in a circumference of the circle is determined based on a location of the contact point of the second touch operation. The touch start time of the first touch operation is earlier or later than the touch start time of the second touch operation.

With reference to the second aspect, in another possible design, the "executing the voice instruction based on the location information of the to-be-operated object on the touchscreen and a sequence of touch start times of the first touch operation and the second touch operation" includes: when the voice instruction is used to indicate to create a line with a unidirectional arrow, creating the line with a unidirectional arrow based on the sequence of the touch start times of the first touch operation and the second touch operation. Herein, a location of an endpoint pointed to by the arrow in the line is determined based on a location of the contact point of the first touch operation, and a location of an endpoint not pointed to by the arrow in the line is determined based on a location of the contact point of the second touch operation. The touch start time of the first touch operation is earlier or later than the touch start time of the second touch operation.

For explanations of related content and descriptions of beneficial effects of the technical solution provided in any one of the second aspect and the possible designs of the second aspect, refer to the technical solution provided in the first aspect or the corresponding possible designs of the first aspect. Details are not described herein again.

According to a third aspect, this application provides a human-computer interaction method. The human-computer interaction method is applied to a human-computer interaction system, and the human-computer interaction system includes a touchscreen. The human-computer interaction method includes: receiving a first touch operation and a second touch operation that have overlapping touch duration, and receiving a voice instruction, where the voice instruction is a voice instruction received within the overlapping touch duration of the first touch operation and the second touch operation; and executing the voice instruction in response to the first touch operation and the second touch operation. In this technical solution, a to-be-executed voice instruction (namely, the voice instruction) is determined based on overlapping touch duration of multi-point touch. In this way, compared with a prior-art solution in which "a wake-up word needs to be frequently used to wake up the human-computer interaction system, so that the to-be-executed voice instruction can be determined based on the wake-up human-computer interaction system", in this technical solution, there is no need to frequently use the wake-up word to wake up the system. This helps enhance user experience in a human-computer interaction process. In addition, compared with the prior art in which the to-be-executed voice instruction (for example, a voice instruction received within a preset time period starting from a touch start moment of single-point touch is used as the to-be-executed voice instruction) is determined based on the single-point touch and a preset time, this technical solution helps flexibly control a time at which the to-be-executed voice instruction is received, to enhance user experience.

With reference to the third aspect, in a possible design, a distance between a contact point of the first touch operation and a contact point of the second touch operation is greater than or equal to a preset threshold.

According to a fourth aspect, this application provides a human-computer interaction method. The human-computer interaction method is applied to a human-computer interaction system, and the human-computer interaction system includes a touchscreen. The human-computer interaction method includes: receiving a first touch operation and a second touch operation, and receiving a voice instruction, where the voice instruction is determined based on touch start duration of the first touch operation or touch start duration of the second touch operation; in response to the first touch operation and the second touch operation, determining location information of a to-be-operated object of the voice instruction on the touchscreen; and executing the voice instruction based on the location information of the to-be-operated object on the touchscreen. In this technical solution, location information of a to-be-operated object of a to-be-executed voice instruction on the touchscreen is determined based on multi-point touch. In this way, in a large-screen scenario, a problem of long-distance sliding on a large screen can be alleviated. This helps enhance user experience in a human-computer interaction process.

With reference to the fourth aspect, in a possible design, the voice instruction is a voice instruction received within a preset time period starting from a touch start time of a target touch operation. In an implementation, the target touch operation is a touch operation whose touch start time is earlier than the touch start times of the first touch operation and the second touch operation. In another implementation, the target touch operation is a touch operation whose touch start time is later than the touch start times of the first touch operation and the second touch operation. In other words, a voice processing time window of the voice instruction may be determined based on a single-point touch operation.

With reference to the fourth aspect, in another possible design, a distance between a contact point of the first touch operation and a contact point of the second touch operation is greater than or equal to a preset threshold.

With reference to the fourth aspect, in another possible design, the "determining location information of a to-be-operated object of the voice instruction on the touchscreen" may include: determining a to-be-operated area of the voice instruction on the touchscreen, where the to-be-operated object is included in the to-be-operated area. In this case, the "executing the voice instruction based on the location information of the to-be-operated object on the touchscreen" may include: determining the to-be-operated area on the touchscreen based on content of the voice instruction, and executing the voice instruction in the to-be-operated area.

For a technical solution provided in another possible design of the fourth aspect, and explanations of related content and descriptions of beneficial effects of the provided technical solution, refer to the technical solution provided in the first aspect or the corresponding possible designs of the first aspect. Details are not described herein again.

According to a fifth aspect, this application provides a human-computer interaction system. The human-computer interaction system may be configured to perform any method provided in the first aspect, the third aspect, or the fourth aspect. The human-computer interaction system may include a touchscreen and a processor.

In a possible design, the touchscreen is configured to receive a first touch operation and a second touch operation, where touch duration of the first touch operation and touch duration of the second touch operation overlap. The processor is configured to receive a voice instruction, where the voice instruction is a voice instruction received within overlapping touch duration of the first touch operation and the second touch operation. The processor is further configured to: in response to the first touch operation and the second touch operation, determine location information of a to-be-operated object of the voice instruction on the touchscreen. The processor is further configured to execute the voice instruction based on the location information of the to-be-operated object on the touchscreen.

In another possible design, the processor is configured to: receive a first touch operation and a second touch operation that have overlapping touch duration, and receive a voice instruction. The voice instruction is a voice instruction received within the overlapping touch duration of the first touch operation and the second touch operation. The processor is further configured to execute the voice instruction in response to the first touch operation and the second touch operation.

In another possible design, the processor is configured to receive the voice instruction within a preset time period starting from a touch start time of a target touch operation. In an implementation, the target touch operation is a touch operation whose touch start time is earlier than touch start times of the first touch operation and the second touch operation. In another implementation, the target touch operation is a touch operation whose touch start time is later than the touch start times of the first touch operation and the second touch operation. In other words, a voice processing time window of the voice instruction may be determined based on a single-point touch operation.

In another possible design, the human-computer interaction system further includes a voice collector.

In an implementation, the voice collector is configured to: collect the voice instruction in real time, and send the collected voice instruction to the processor. In another implementation, the voice collector exchanges information with the processor, to determine to collect and send the voice instruction. For example, the voice collector is configured to send a first instruction at a start moment of the overlapping touch duration of the first touch operation and the second touch operation. The first instruction is used to indicate the voice collector to start to collect the voice instruction. The processor is configured to send a second instruction to the voice collector at an end moment of the overlapping touch duration of the first touch operation and the second touch operation. The second instruction is used to indicate the voice collector to stop collecting the voice instruction.

In the fifth aspect, for descriptions of another possible technical solution and beneficial effects executed by the processor and the touchscreen, refer to the technical solution provided in the first aspect or the corresponding possible designs of the first aspect. Details are not described herein again.

According to a sixth aspect, this application provides a computer device. The computer device may be configured to perform any method provided in the second aspect. In this case, the computer device may be specifically a processor or a device including a processor.

In a possible design, the apparatus may be divided into functional modules based on any method provided in the second aspect. For example, each functional module may be obtained through division based on a corresponding function, or at least two functions may be integrated into one processing module.

In another possible design, the computer device includes a memory and one or more processors. The memory is coupled to the processor. The memory is configured to store computer program code, and the computer program code includes a computer instruction. When the computer instruction is executed by the computer device, the computer device is enabled to perform the human-computer interaction method according to any one of the second aspect and the possible designs of the second aspect.

According to a seventh aspect, this application provides a chip system, and the chip system is applied to a human-computer interaction system. The chip system includes one or more interface circuits and one or more processors.

The interface circuit and the processor are interconnected through a line. The interface circuit is configured to receive a signal from a memory of the human-computer interaction system, and send the signal to the processor, where the signal includes a computer instruction stored in the memory. When the processor executes the computer instruction, the human-computer interaction system performs the human-computer interaction method according to any possible design provided in the first aspect, the third aspect, or the fourth aspect.

According to an eighth aspect, this application provides a chip system, and the chip system is applied to a computer device. The chip system includes one or more interface circuits and one or more processors.

The interface circuit and the processor are interconnected through a line. The interface circuit is configured to receive a signal from a memory of the computer device, and send the signal to the processor, where the signal includes a computer instruction stored in the memory. When the processor executes the computer instruction, the computer device performs the human-computer interaction method according to any one of the second aspect and the possible designs of the second aspect.

According to a ninth aspect, this application provides a computer-readable storage medium, and the computer-readable storage medium includes a computer instruction. When the computer instruction is run on a human-computer interaction system, the human-computer interaction system is enabled to implement the human-computer interaction method according to any possible design provided in the first aspect, the third aspect, or the fourth aspect.

According to a tenth aspect, this application provides a computer-readable storage medium, and the computer-readable storage medium includes a computer instruction. When the computer instruction is run on a computer device, the computer device is enabled to implement the human-computer interaction method according to any one of the second aspect and the possible designs of the second aspect.

According to an eleventh aspect, this application provides a computer program product. When the computer program product runs on a human-computer interaction system, the human-computer interaction system is enabled to implement the human-computer interaction method according to any possible design provided in the first aspect, the third aspect, or the fourth aspect.

According to a twelfth aspect, this application provides a computer program product. When the computer program product runs on a computer device, the computer device is enabled to implement the human-computer interaction method according to any one of the second aspect and the possible designs of the second aspect.

For detailed descriptions of the second aspect to the twelfth aspect and the implementations of the second aspect to the twelfth aspect in this application, refer to detailed descriptions of the first aspect and the implementations of the first aspect. In addition, for beneficial effects of the second aspect to the twelfth aspect and the implementations of the second aspect to the twelfth aspect, refer to analysis of beneficial effects of the first aspect and the implementations of the first aspect. Details are not described herein again.

In this application, a name of the human-computer interaction system does not constitute a limitation to devices or functional modules. In actual implementation, these devices or functional modules may have other names. Provided that functions of the devices or the functional modules are similar to those in this application, the devices or the functional modules fall within the scope of the claims in this application and their equivalent technologies.

These aspects or other aspects in this application are more concise and comprehensible in the following descriptions.

### BRIEF DESCRIPTION OF DRAWINGS

FIG. 1 is a structural diagram of hardware of a human-computer interaction system according to an embodiment of this application;
FIG. 2 is a schematic structural diagram 1 of a human-computer interaction system according to an embodiment of this application;
FIG. 3 is a schematic structural diagram 2 of a human-computer interaction system according to an embodiment of this application;
FIG. 4 is a schematic flowchart 1 of a human-computer interaction method according to an embodiment of this application;
FIG. 5 is a schematic diagram 1 of a human-computer interaction method according to an embodiment of this application;
FIG. 6 is a schematic diagram 2 of a human-computer interaction method according to an embodiment of this application;
FIG. 7 is a schematic diagram 3 of a human-computer interaction method according to an embodiment of this application;
FIG. 8 is a schematic diagram 4 of a human-computer interaction method according to an embodiment of this application;
FIG. 9 is a schematic diagram 5 of a human-computer interaction method according to an embodiment of this application;
FIG. 10 is a schematic diagram 6 of a human-computer interaction method according to an embodiment of this application;
FIG. 11 is a schematic diagram 7 of a human-computer interaction method according to an embodiment of this application;
FIG. 12(a) and FIG. 12(b) are a schematic diagram 8 of a human-computer interaction method according to an embodiment of this application;
FIG. 13 is a schematic flowchart 2 of a human-computer interaction method according to an embodiment of this application;
FIG. 14 is a schematic flowchart 3 of a human-computer interaction method according to an embodiment of this application;
FIG. 15 is a schematic flowchart 4 of a human-computer interaction method according to an embodiment of this application;
FIG. 16 is a schematic structural diagram of a computer device according to an embodiment of this application;
FIG. 17 is a schematic structural diagram of a chip system according to an embodiment of this application; and
FIG. 18 is a schematic structural diagram of a computer program product according to an embodiment of this application.

### DESCRIPTION OF EMBODIMENTS

In embodiments of this application, the word "example" or "for example" is used to represent giving an example, an illustration, or a description. Any embodiment or design scheme described as "example" or "for example" in the embodiments of this application should not be explained as being more preferred or having more advantages than another embodiment or design scheme. Exactly, use of the word "example" or "for example" is intended to present a relative concept in a specific manner.

The terms "first" and "second" in the embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of the embodiments of this application, unless otherwise stated, "a plurality of' means two or more than two.

The embodiments of this application provide a human-computer interaction method, apparatus, and system. In the embodiments, touch duration of a first touch operation and touch duration of a second touch operation that are received by the human-computer interaction system overlap. In overlapping touch duration, the human-computer interaction system executes a voice monitoring instruction. Then, the human-computer interaction system executes a voice instruction based on an indication of the voice instruction and location information of the first touch operation and location information of the second touch operation. According to the human-computer interaction method provided in the embodiments of this application, human-computer interaction is performed in two modes: the touch operation and voice monitoring. This enhances user experience in a human-computer interaction process.

The human-computer interaction method may be implemented by using an application program installed on a device, for example, a human-computer interaction application program.

The application program may be an embedded application program (namely, a system application of the device) installed on the device, or may be a downloadable application program. The embedded application program is an application program provided as a part of the device (for example, a mobile phone). The downloadable application program is an application program that may provide an internet protocol multimedia subsystem (internet protocol multimedia subsystem, IMS) connection of the downloadable application program. The downloadable application program may be an application pre-installed on the device or a third-party application that is downloaded by a user and installed on the device.

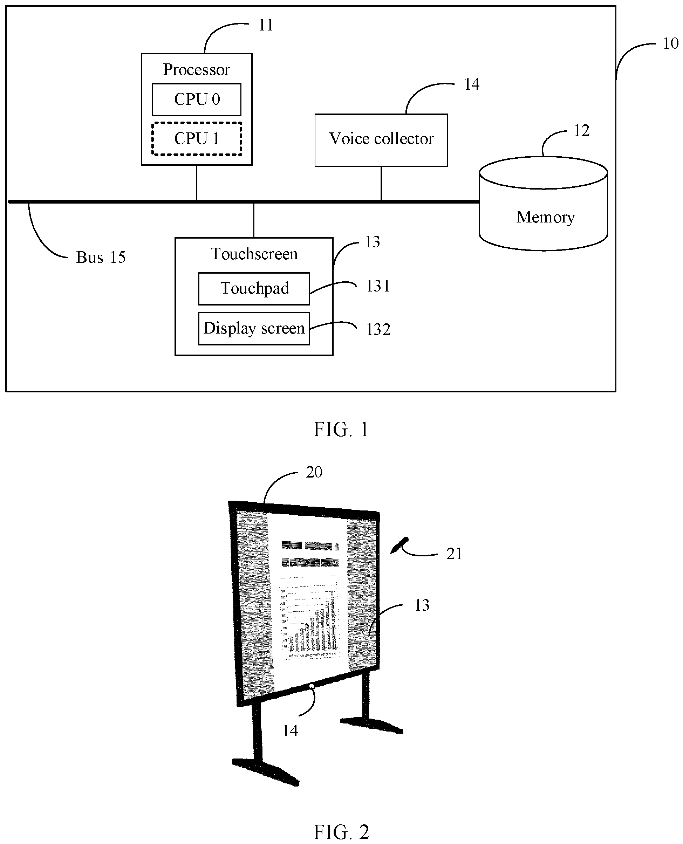

FIG. 1 shows a hardware structure of a human-computer interaction system according to an embodiment of this application. As shown in FIG. 1, the human-computer interaction system 10 includes a processor 11, a memory 12, a touchscreen 13, and a voice collector 14. The processor 11, the memory 12, the touchscreen 13, and the voice collector 14 may be integrated into one device, or may be separately integrated into different devices.

The following describes the hardware structure of the human-computer interaction system 10 by using an example in which the processor 11, the memory 12, the touchscreen 13, and the voice collector 14 are integrated into one device. When the processor 11, the memory 12, the touchscreen 13, and the voice collector 14 are integrated into one device, the human-computer interaction system 10 further includes a bus 15. The processor 11, the memory 12, the touchscreen 13, and the voice collector 14 are connected through the bus 15.

The processor 11 is a control center of the human-computer interaction system 10, and may be a general-purpose central processing unit (central processing unit, CPU), another general-purpose processor, or the like. The general-purpose processor may be a microprocessor, any conventional processor, or the like.

In an example, the processor 11 may include one or more CPUs, for example, a CPU 0 and a CPU 1 that are shown in FIG. 1.

The memory 12 may be a read-only memory (read-only memory, ROM) or another type of static storage device capable of storing static information and an instruction, a random access memory (random access memory, RAM) or another type of dynamic storage device capable of storing information and an instruction, or may be an electrically erasable programmable read-only memory (electrically erasable programmable read-only memory, EEPROM), a magnetic disk storage medium or another magnetic storage device, or any other medium capable of carrying or storing expected program code in a form of an instruction or a data structure and capable of being accessed by a computer, but is not limited thereto.

In a possible implementation, the memory 12 may be independent of the processor 11. The memory 12 may be connected to the processor 11 through the bus 15, and is configured to store data, an instruction, or program code. When invoking and executing the instruction or the program code stored in the memory 12, the processor 11 can implement the human-computer interaction method provided in the embodiments of this application.

In another possible implementation, the memory 12 may alternatively be integrated with the processor 11.

The touchscreen 13 may specifically include a touchpad 131 and a display screen 132.

The touchpad 131 may collect a touch event performed by a user on or near the touchpad 131 (for example, an operation performed by the user on the touchpad or near the touchpad by using any proper object, for example, a finger or a stylus), and send collected touch information to another component (for example, the processor 11). The touch event performed by the user near the touchpad may be referred to as floating touch. The floating touch may mean that the user does not need to directly touch the touchpad to select, move, or drag an object (for example, an icon), and instead, the user only needs to be near the device to perform a desired function. In addition, the touchpad may be implemented in a plurality of types such as a resistive type, a capacitive type, an infrared type, and a surface acoustic wave type.

The display screen 132 may be configured to display information entered by the user or information provided for the user. The display screen 132 may be configured in a form of a liquid crystal display screen, an organic light-emitting diode, or the like. The touchpad 131 may cover the display screen 132. After detecting the touch event on or near the touchpad 131, the touchpad 131 transfers the touch event to the processor 11 to determine a type of the touch event. The processor 11 may provide corresponding visual output on the display screen 132 based on the type of the touch event.

The voice collector 14 is configured to receive a voice signal, convert the voice signal into an electrical signal, and send the electrical signal to another component (for example, the processor 11) for processing. The voice collector may be a microphone, also referred to as a "mic", a "sound conducting device", or the like.

The bus 15 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 1, but this does not mean that there is only one bus or only one type of bus.

It should be noted that the structure shown in FIG. 1 does not constitute a limitation on the human-computer interaction system 10. In addition to the components shown in FIG. 1, the human-computer interaction system 10 may include more or fewer components than those shown in the figure, or combine some components, or have different component arrangements.

When the processor 11, the memory 12, the touchscreen 13, and the voice collector 14 are integrated into one device, the human-computer interaction system 10 may be a device, for example, an electronic whiteboard, a smartphone, a notebook computer with a touchscreen, a computer with a touchscreen, a tablet, a netbook, or a vehicle-mounted device. For example, as shown in FIG. 2, the processor 11, the memory 12, the touchscreen 13, and the voice collector 14 are integrated into an electronic whiteboard 20. In this case, the human-computer interaction application program may run on the electronic whiteboard 20. Optionally, the human-computer interaction system 10 may further include a stylus 21, and the stylus 21 is configured to input a touch operation on a touchscreen 13 of the electronic whiteboard 20.

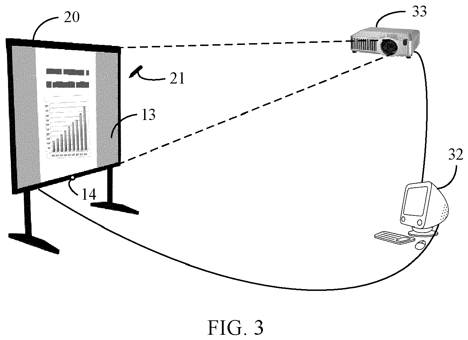

When the processor 11, the memory 12, the touchscreen 13, and the voice collector 14 are separately integrated into different devices, the human-computer interaction system 10 may include a plurality of devices, to perform the human-computer interaction method provided in the embodiments of this application. For example, the human-computer interaction system 10 shown in FIG. 3 may include the electronic whiteboard 20, a computer 32, and a projector 33. Optionally, the human-computer interaction system 10 may further include the stylus 21, and the stylus 21 is configured to input a touch operation on the touchscreen 13 of the electronic whiteboard 20. The processor 11 may be a processor of the computer 32. The memory 12 may be a memory of the computer 32. The processor 11 and the memory 12 are connected through the bus 15. In this case, the human-computer interaction application program may run on the computer 32. In addition, the touchscreen 13 may be a touchscreen of the electronic whiteboard 20. The voice collector 14 may be integrated into the electronic whiteboard 20. Alternatively, the voice collector 14 may be integrated into the computer 32, the projector 33, or the stylus 21. This is not limited in this embodiment of this application.

It may be understood that the foregoing description of the human-computer interaction system 10 provided in this embodiment of this application is merely an example for description, and does not constitute a limitation on this embodiment. It may be understood that any device or a combination of devices that can implement the human-computer interaction method provided in the embodiments of this application shall fall within the protection scope of the embodiments of this application.

The following describes, with reference to accompanying drawings, the human-computer interaction method provided in the embodiments of this application.

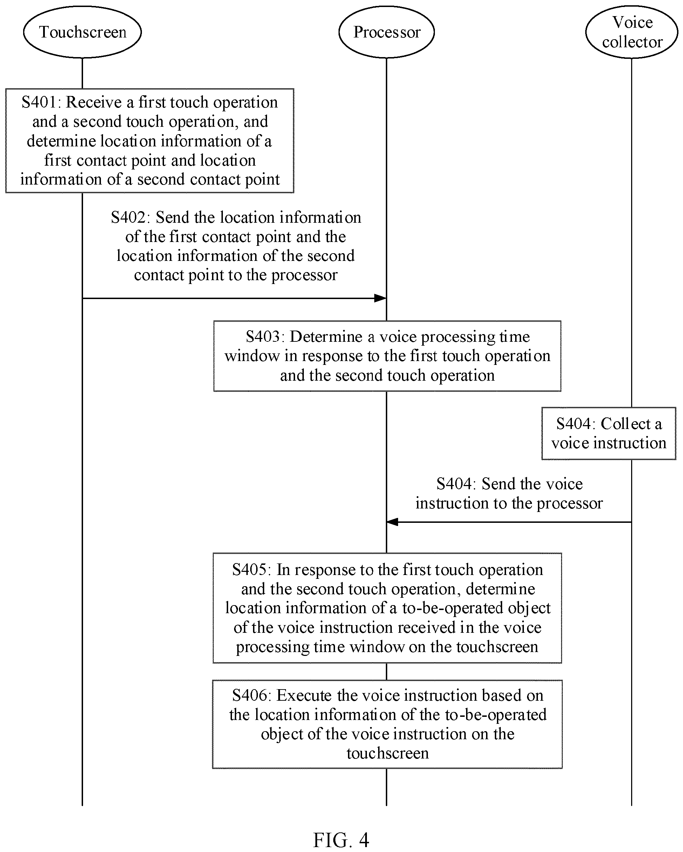

FIG. 4 is a schematic flowchart of a human-computer interaction method according to an embodiment of this application. The human-computer interaction method includes the following steps.

S401: A touchscreen receives a first touch operation and a second touch operation, and determines location information of a first contact point and location information of a second contact point.

The first touch operation and the second touch operation may be touch operations performed by a user on the touchscreen by using a finger or a stylus. The first touch operation and the second touch operation each have specific touch duration. The touchscreen may simultaneously receive the first touch operation and the second touch operation, or may receive the first touch operation and the second touch operation at different moments.

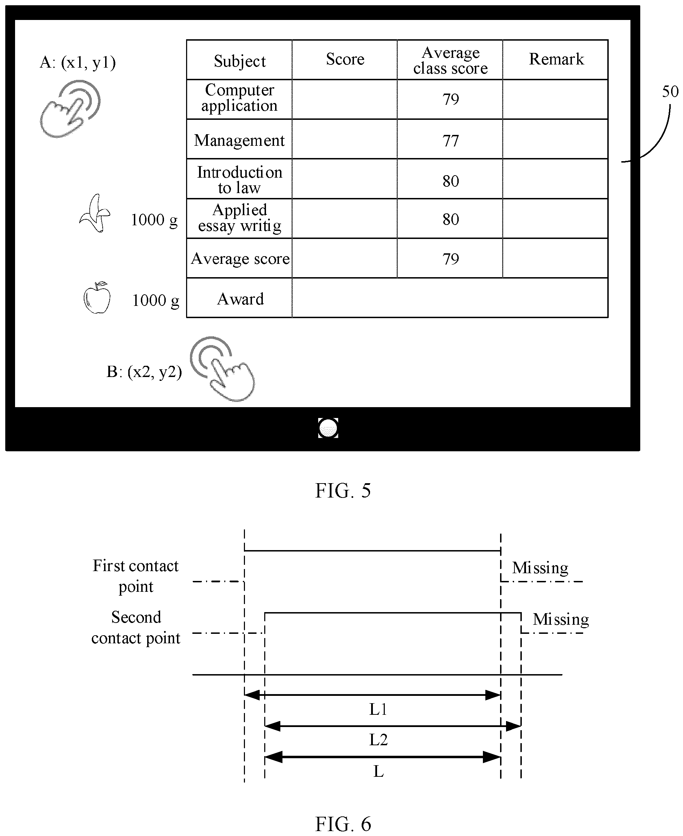

The first contact point is a contact point between the first touch operation and the touchscreen. The second contact point is a contact point between the second touch operation and the touchscreen. Location information of a contact point is used to represent a location of the contact point on the touchscreen. Specific content of the location information of the contact point is not limited in this embodiment of this application. For example, the location information of the contact point may be coordinates of the contact point on the touchscreen. For example, FIG. 5 shows coordinates (x₁, y₁) of a first contact point A determined after a touchscreen 50 receives the first touch operation and coordinates (x₂, y₂) of a second contact point B determined after the touchscreen 50 receives the second touch operation.

Optionally, a distance between the first contact point and the second contact point may be greater than or equal to a preset threshold. In other words, in this embodiment of this application, a scenario (for example, a large-screen scenario) in which a distance between two contact points is relatively large is supported. This helps resolve a problem of high difficulty of a one-hand operation in the large-screen scenario. The preset threshold may be set based on an actual case. This is not specifically limited in this embodiment of this application. Optionally, a size of the touchscreen (namely, a size of a long side and/or a size of a short side of the touchscreen) is greater than a threshold. In other words, the large-screen scenario is supported in this embodiment of this application.

Optionally, after receiving the first touch operation, the touchscreen may further determine location information of a first contact point group. Similarly, after receiving the second touch operation, the touchscreen may further determine location information of a second contact point group. Herein, a distance between every two contact points in one contact point group is less than or equal to a preset distance. A contact point location corresponding to a touch operation is indicated by using a contact point group. This can effectively avoid a misoperation of the user when the user performs the touch operation. For example, a palm touches the touchscreen. The preset distance may be set by a human-computer interaction system based on an actual case. This is not specifically limited in this embodiment of this application.

In the following description of this embodiment of this application, an example in which the touchscreen determines the location information of the first contact point based on the first touch operation, and determines the location information of the second contact point based on the second touch operation is used for description.

S402: The touchscreen sends the location information of the first contact point and the location information of the second contact point to a processor.

Specifically, the touchscreen may send the determined location information of the contact points to the processor periodically or in a trigger manner or in a real-time manner. For example, the touchscreen may send one frame of data to the processor in each period. The frame of data includes location information of a contact point of a touch operation determined in the period, for example, includes location information of the first contact point and location information of the second contact point in the period.

S403: The processor determines a voice processing time window in response to the first touch operation and the second touch operation.

Specifically, the processor may determine the voice processing time window in any one of the following manners.

Manner 1: The processor may determine the voice processing time window based on overlapping touch duration of the first touch operation and the second touch operation and according to a preset rule. The preset rule may indicate that the overlapping touch duration is the voice processing time window, or the preset rule may indicate that a moment, after preset duration from a start moment of the overlapping touch duration, to an end moment of the overlapping touch duration is the voice processing time window.

In other words, the voice processing time window is included in the overlapping touch duration, and the end moment of the overlapping touch duration is a moment at which the processor ends the voice processing time window. In other words, the voice processing time window may be equal to the overlapping touch duration, or duration of the voice processing time window is less than the overlapping touch duration.

For example, FIG. 6 is a schematic diagram of a relationship between the touch duration of the first touch operation, the touch duration of the second touch operation, and the voice processing time window. As shown in FIG. 6, the touch duration of the first touch operation corresponding to the first contact point is L1, the touch duration of the second touch operation corresponding to the second contact point is L2, and the duration of the voice processing time window is overlapping touch duration L of the first touch operation and the second touch operation.

Manner 2: The processor may send a first instruction to a voice collector at the start moment of the overlapping touch duration of the first touch operation and the second touch operation, where the first instruction is used to indicate the voice collector to start to collect a voice instruction. In addition, the processor sends a second instruction to the voice collector at the end moment of the overlapping touch duration of the first touch operation and the second touch operation, where the second instruction is used to indicate the voice collector to stop collecting the voice instruction. In this case, in an example, for the first touch operation and the second touch operation, the processor may determine duration from the moment at which the first instruction is sent to the voice collector to the moment at which the second instruction is sent to the voice collector as the voice processing time window.

Optionally, in Manner 2, when the end moment of the overlapping touch duration of the first touch operation and the second touch operation is the same as the start moment of the overlapping touch duration of the first touch operation and the third touch operation, the processor may not send the first instruction and the second instruction to the voice collector at the moment.

Optionally, the processor may determine the touch duration of the first touch operation by tracking the first contact point. The processor may determine the touch duration of the second touch operation by tracking the second contact point. For specific contact point tracking processes, refer to the following descriptions of S131 to S136 and S141 to S144.

S404: The voice collector collects the voice instruction, and sends the voice instruction to the processor.

In an implementation, the voice collector collects the voice instruction in real time, and sends the voice instruction to the processor. A voice collection manner corresponds to Manner 1 in S403.

In another implementation, the voice collector collects the voice instruction according to the first instruction received from the processor, and sends the collected voice instruction to the processor. The voice collector further stops collecting the voice instruction according to the second instruction received from the processor. A voice collection manner corresponds to Manner 2 in S403.

The voice instruction may be a voice instruction sent by the user or a device and collected by the voice collector.

Content of the voice instruction may include "selecting an object", "modifying an object", "deleting an object", "creating an object", or the like.

For example, the voice instruction "selecting an object" may include "selecting a text", the voice instruction "modifying an object" may include "making a text color bold", the voice instruction "deleting an object" may include "deleting a picture", and the voice instruction "creating an object" may include "creating a table with three rows and two columns", "creating a circle", or the like.

It may be understood that a process in which the voice collector collects the voice instruction in real time and sends the voice instruction to the processor and the foregoing process in S401 to S403 are two independent and parallel processes, and there is no time sequence limitation on execution of the two processes.

S405: The processor determines, in response to the first touch operation and the second touch operation, location information of a to-be-operated object, of the voice instruction received in the voice processing time window, on the touchscreen.

The processor may receive one or more voice instructions in the voice processing time window.

Optionally, if a voice instruction received by the processor is not in the voice processing time window, the processor may discard the voice instruction, or set the voice instruction to be invalid.

It may be understood that, in the voice processing time window, the processor may receive one or more voice instructions, and execute the one or more voice instructions. In an implementation, one voice instruction cannot cross a plurality of voice processing time windows.

For example, an end point of a first voice processing time window is a start point of a second voice processing time window. When the processor receives some content of a voice instruction in the first voice processing time window, and receives the other content of the voice instruction in the second voice processing time window, the processor does not execute the voice instruction.

For another example, a voice processing time window corresponding to the first contact point and the second contact point is a first voice processing time window, and a voice processing time window corresponding to the first contact point and a third contact point is a third voice processing time window. Herein, the first voice processing time window and the third voice processing time window do not coexist, or an end point of the first voice processing time window is a start point of the third voice processing time window, or a start point of the first voice processing time window is an end point of the third voice processing time window. When the processor receives some content of a voice instruction in the first voice processing time window, and receives the other content of the voice instruction in the third voice processing time window, the processor does not execute the voice instruction.

Specifically, the processor may determine the location information of the to-be-operated object of the voice instruction on the touchscreen in Manner 1 or Manner 2 described below. Herein, the to-be-operated object may be an object included in the voice instruction, or may be a to-be-created object indicated in the voice instruction.

Manner 1: The processor determines a to-be-operated area based on the location information of the first contact point and the location information of the second contact point, and determines the location information of the to-be-operated object of the voice instruction on the touchscreen based on the to-be-operated area. The to-be-operated object is included in the to-be-operated area.

The to-be-operated object may be entirely included in the to-be-operated area, or may be partially included in the to-be-operated area. In this embodiment of this application, an example in which the to-be-operated object is entirely included in the to-be-operated area is used for description.

For example, the to-be-operated object may be a text object in the voice instruction "selecting a text", or a text object to be bold in the voice instruction "making a text color bold", or a picture object in the voice instruction "deleting a picture", or a table object in the voice instruction "creating a table with three rows and two columns".

Optionally, based on the location information of the first contact point and the location information of the second contact point, the processor may create a circle by using a connection line between the first contact point and the second contact point as a radius, or create a circle by using a connection line between the first contact point and the second contact point as a diameter, to obtain a circular to-be-operated area.

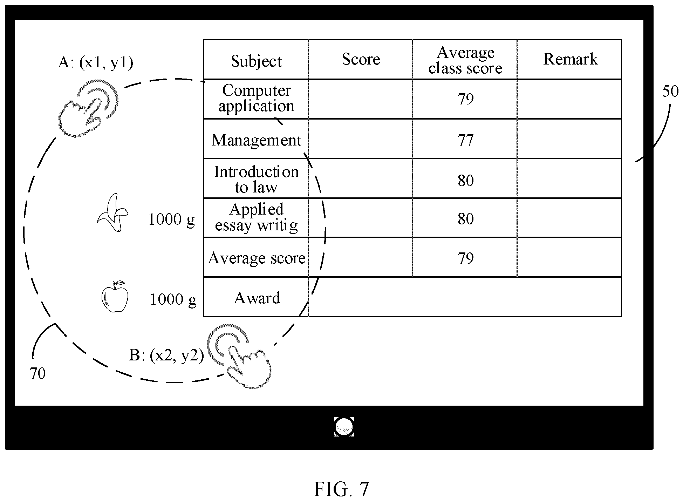

For example, with reference to FIG. 5, FIG. 7 shows a circular to-be-operated area 70 obtained by creating a circle by using the connection line between the first contact point and the second contact point as a diameter.

Optionally, based on the location information of the first contact point and the location information of the second contact point, the processor may obtain a rectangular or regular polygonal to-be-operated area by using the connection line between the first contact point and the second contact point as a diagonal. Alternatively, based on the location information of the first contact point and the location information of the second contact point, the processor may obtain a regular polygonal or rhombic to-be-operated area by using the connection line between the first contact point and the second contact point as a side. Herein, both a relative location of the regular polygonal or rhombic to-be-operated area to the connection line between the first contact point and the second contact point, and an inner-angle degree of the rhombus may be specified by the processor according to the preset rule. This is not limited in this embodiment of this application.

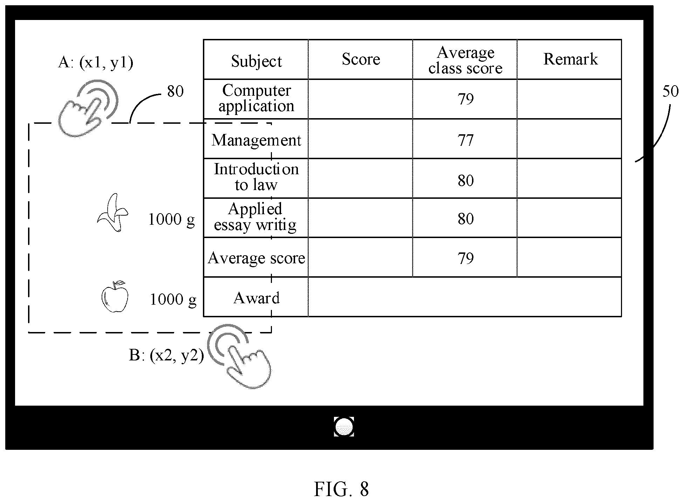

For example, with reference to FIG. 5, FIG. 8 shows a rectangular to-be-operated area 80 obtained by using the connection line between the first contact point and the second contact point as a diagonal.

It may be understood that the foregoing manner of determining the to-be-operated area based on the location information of the first contact point and the location information of the second contact point is merely an example for description, and does not constitute a limitation on the protection scope of this embodiment of this application.

Optionally, the processor may further indicate, based on the determined to-be-operated area, the display screen to display the to-be-operated area.

Optionally, the display screen may display the to-be-operated area in a form of a frame. The frame of the to-be-operated area may be a black dashed-line frame shown in FIG. 7 or FIG. 8, or may be a dashed-line frame of another color, or may be a black solid-line frame or a solid-line frame of another color. This is not limited in this embodiment of this application.

Optionally, the display screen may alternatively display the to-be-operated area by changing a background color of the to-be-operated area.

Certainly, the display screen may alternatively display the to-be-operated area in any manner that can distinguish the to-be-operated area from a background currently displayed on the display screen. This is not limited in this embodiment of this application.

Manner 2: The processor determines location information of a first endpoint and location information of a second endpoint based on the location information of the first contact point and the location information of the second contact point, and determines the location information of the to-be-operated object of the voice instruction on the touchscreen based on the determined location information of the first endpoint and the determined location information of the second endpoint.

Both the first endpoint and the second endpoint are included in the to-be-operated object, or the to-be-operated object may be constructed by using the first endpoint and the second endpoint. For the to-be-operated object, attributes of the first endpoint and the second endpoint may be the same or different. For example, the voice instruction is "creating a circle". If both the first endpoint and the second endpoint are points on the circumference of the to-be-operated object "circle", both the first endpoint and the second endpoint are included in the to-be-operated object, and have the same attribute. If the first endpoint is the center of the to-be-operated object "circle", and the second endpoint is a point on the circumference of the to-be-operated object "circle", the processor may construct the to-be-operated object "circle" by using the first endpoint and the second endpoint, and for the "circle", the attributes of the first endpoint and the second endpoint are different.

Specifically, the processor may respectively use the first contact point and the second contact point as the first endpoint and the second endpoint, to determine the location information of the first endpoint and the location information of the second endpoint. For example, the processor uses the first contact point as the first endpoint, and uses the second contact point as the second endpoint. In this case, the location information of the first endpoint is the location information of the first contact point, and the location information of the second endpoint is the location information of the second contact point.

The processor may alternatively determine the location information of the first endpoint and the location information of the second endpoint according to the preset rule and based on the location information of the first contact point and the location information of the second contact point. The preset rule may be a sequence of touch start times of the first touch operation and the second touch operation, or may be that a preset distance exists between the first contact point and the second contact point and a preset distance exists between the first endpoint and the second endpoint. Certainly, the preset rule may alternatively be another rule. This is not limited in this embodiment of this application.

For example, if the first touch operation is earlier than the second touch operation, the processor uses the first contact point as the first endpoint, and uses the second contact point as the second endpoint. In this case, the location information of the first endpoint is the location information of the first contact point, and the location information of the second endpoint is the location information of the second contact point. Certainly, if the first touch operation is earlier than the second touch operation, the processor may also use the first contact point as the second endpoint, and use the second contact point as the first endpoint. In this case, the location information of the first endpoint is the location information of the second contact point, and the location information of the second endpoint is the location information of the first contact point.

S406: The processor executes the voice instruction based on the location information of the to-be-operated object of the voice instruction on the touchscreen.

The following describes scenarios in which the processor executes different voice instructions.

### Scenario 1

The voice instruction received by the processor in the voice processing time window includes any one of selecting the to-be-operated object, deleting the to-be-operated object, modifying attribute information of the to-be-operated object, or creating the to-be-operated object.

The processor executes, according to the voice instruction, the voice instruction in the to-be-operated area determined in Manner 1 in S405.

Specifically, the following separately describes processes in which the processor executes the foregoing voice instructions.

(1) If the voice instruction is used to select the to-be-operated object, the processor selects the to-be-operated object in the to-be-operated area, and indicates the display screen to display a selection result.

Optionally, that the selection result is displayed on the display screen may be that the selection result is displayed by surrounding a frame of the to-be-operated object, or that the selection result is displayed by changing a background color of the to-be-operated object. This is not limited in this application.

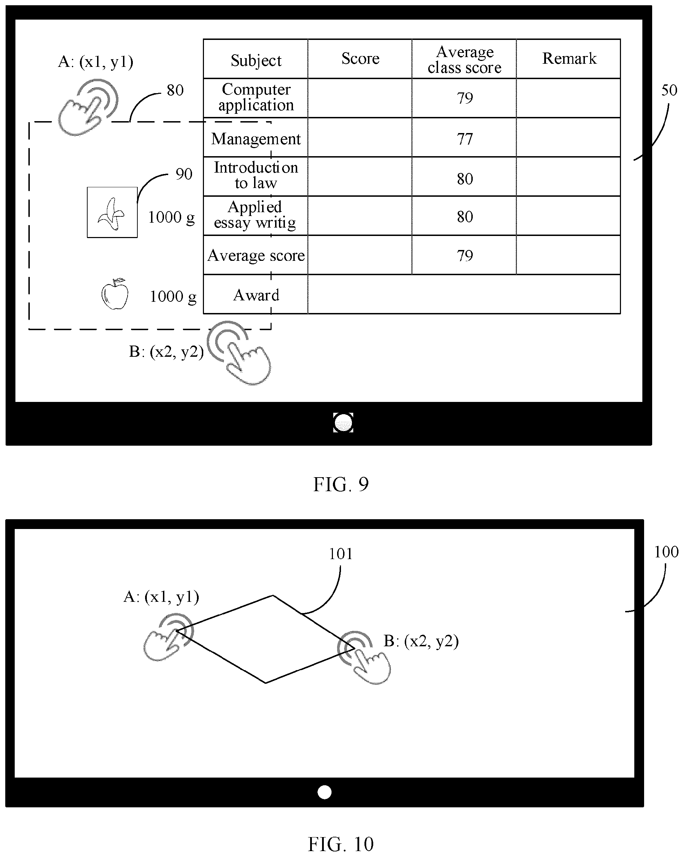

For example, with reference to FIG. 8, refer to FIG. 9. If the voice instruction is "selecting a banana icon", the processor selects a banana icon in the to-be-operated area 80 according to the voice instruction, and indicates the display screen 50 to display a selection result by using a square frame 90.

(2) If the voice instruction is used to indicate to delete the to-be-operated object, the processor deletes the to-be-operated object from the to-be-operated area, and indicates the display screen to display a deletion result.

For example, with reference to FIG. 9, if the voice instruction is "deleting an apple icon", the processor deletes an apple icon in the to-be-operated area 80 according to the voice instruction, and indicates the display screen to display a deletion result.

(3) If the voice instruction is used to indicate to create a to-be-operated object, the processor creates a specified object in the to-be-operated area, and indicates the display screen to display the created object.

For example, with reference to FIG. 9, if the voice instruction is "creating a table with three rows and two columns", the processor creates the table with three rows and two columns in the to-be-operated area 80 according to the voice instruction. A row width and a row height of the table may be specified by the system according to the preset rule, or may be set by the user. This is not specifically limited in this embodiment of this application. Herein, if the row height and the row width of the created table are set by the user, specifically, the processor may query, by using a device for external voice playing, for example, a loudspeaker, the row height and the row width that are required by the user, and then the user inputs a voice by using a microphone, to answer the processor. Further, the processor creates the table according to an indication of the user. Then, the processor indicates the display screen to display the created table.

(4) If the voice instruction is used to indicate to modify the attribute information of the to-be-operated object, the processor modifies the attribute information of the to-be-operated object in the to-be-operated area, and indicates the display screen to display the to-be-operated object whose attribute information is modified.

For example, with reference to FIG. 9, if the voice instruction is "making a text bold", the processor performs, according to the voice instruction, bold processing on a text "1000 g" in the to-be-operated area 80, and indicates the display screen to display a bold text.

Certainly, the voice instructions described above are merely examples for describing a voice instruction executed by a human-computer interaction apparatus in the to-be-operated area, and does not constitute a limitation on the protection scope of this embodiment of this application.

### Scenario 2

The voice instruction received by the processor in the voice processing time window includes creating an object. The object may be determined by using two points, and attributes of the object at the two points are the same. For example, the object is a straight line without an arrow, a straight line with a bidirectional arrow, a line segment, a broken line without an arrow, a broken line with a bidirectional arrow, a curve, a circle, a polygon, or the like. The broken line herein may be a right-angled broken line. The circle herein is a circle created by using a known line segment as a diameter. A type of the polygon may include a rhombus, a regular polygon, or the like.

According to the voice instruction, the processor executes the voice instruction based on the location information of the first endpoint and the location information of the second endpoint. In the following description of this embodiment of this application, an example in which the first endpoint is the first contact point and the second endpoint is the second contact point is used for description.

Specifically, the following separately describes, with reference to FIG. 5, processes in which the processor executes the foregoing voice instructions.
(1) If the voice instruction is "creating a straight line", the processor connects the first contact point A and the second contact point B to obtain a straight line, and indicates the display screen to display the straight line.
(2) If the voice instruction is "creating a straight line with a bidirectional arrow" or "creating a broken line with a bidirectional arrow", the processor creates a straight line with a bidirectional arrow or a broken line with a bidirectional arrow by using the first contact point A and the second contact point B as two endpoints, and indicates the display screen to display the straight line with a bidirectional arrow or the broken line with a bidirectional arrow.
(3) If the voice instruction is "creating a line segment", the processor creates a line segment by using the first contact point A as an endpoint and using the second contact point B as the other endpoint, and indicates the display screen to display the line segment.
(4) If the voice instruction is "creating a broken line", the processor creates a broken line by using the first contact point A as an endpoint and using the second contact point B as the other endpoint, and indicates the display screen to display the broken line. A specific shape of the broken line may be specified by the processor according to the preset rule. This is not limited in this embodiment of this application.
(5) If the voice instruction is "creating a curve", the processor creates a curve by using the first contact point A as an endpoint and using the second contact point B as the other endpoint, and indicates the display screen to display the curve. A curvature and a bending shape of the curve may be specified by the processor according to the preset rule. This is not limited in this embodiment of this application.
(6) If the voice instruction is "creating a circle by using a diameter", the processor creates a circle by using a connection line between the first contact point A and the second contact point B as a diameter, and indicates the display screen to display the circle.
(7) If the voice instruction is "creating a rhombus", the processor creates a rhombus by using a connection line between the first contact point A and the second contact point B as a side of the rhombus, and indicates the display screen to display the rhombus. A relative location of the connection line between the first contact point A and the second contact point B to the rhombus, and an inner-angle degree of the rhombus may be specified by the processor according to the preset rule. This is not limited in this embodiment of this application. Alternatively, the processor creates a rhombus by using the connection line between the first contact point A and the second contact point B as a diagonal of the rhombus, and indicates the display screen to display the rhombus. In this case, a length of the other diagonal of the rhombus may be specified by the processor according to the preset rule. This is not limited in this embodiment of this application.

For example, referring to FIG. 10, the voice instruction is "creating a rhombus by using a diagonal", and the preset rule specified by the processor is that an unknown diagonal length is 1/2 of a known diagonal length. As shown in FIG. 10, the processor creates, according to the received voice instruction, a rhombus 101 of which one diagonal is a connection line AB between the contact point A and the contact point B, and the other diagonal is (AB)/2, and displays the rhombus 101 on the display screen 100.

(8) If the voice instruction is "creating a regular pentagon", the processor creates a regular pentagon by using the connection line between the first contact point A and the second contact point B as a diagonal of the regular pentagon, and indicates the display screen to display the pentagon. Alternatively, the processor creates a regular pentagon by using the connection line between the first contact point A and the second contact point B as a side of the regular pentagon, and indicates the display screen to display the pentagon. A relative location of the connection line between the first contact point A and the second contact point B to the regular pentagon may be specified by the processor according to the preset rule. This is not limited in this embodiment of this application.

Certainly, the voice instructions described above are merely examples for describing the voice instruction executed by the human-computer interaction apparatus in the to-be-operated area, and does not constitute a limitation on the protection scope of this embodiment of this application.

### Scenario 3

The voice instruction received by the processor in the voice processing time window is used to create an object. The object may be determined by using two points, and attributes of the object at the two points are different. For example, the object is a ray, a line with a unidirectional arrow, a circle, or the like.

Because the attributes of the object at the two points are different, the processor may create the object (for example, create the circle or the line with a unidirectional arrow) based on the sequence of the touch start times of the first touch operation and the second touch operation. Certainly, this embodiment of this application is not limited thereto.

When the circle is created, a location of the center of the circle may be determined based on a location of the contact point of the first touch operation, and a location of a point in the circumference of the circle may be determined based on a location of the contact point of the second touch operation. When the line with a unidirectional arrow is created, a location of the endpoint pointed by the arrow in the line may be determined based on the location of the contact point of the first touch operation, and a location of the endpoint not pointed by the arrow in the line may be determined based on the location of the contact point of the second touch operation. Herein, the touch start time of the first touch operation is earlier or later than the touch start time of the second touch operation.

Therefore, the processor determines the location information of the first endpoint and the location information of the second endpoint according to the voice instruction and based on the sequence of the touch start times of the first touch operation and the second touch operation, and executes the voice instruction. In the following description of this embodiment of this application, an example in which the first touch operation is earlier than the second touch operation, and the processor uses the first contact point as the first endpoint and uses the second contact point as the second endpoint is used for description.

Specifically, the following separately describes processes in which the processor executes the foregoing voice instructions.
(1) If the voice instruction is "creating a ray", the processor may create, by using the first endpoint as an endpoint of the ray, a ray that passes through the second endpoint, and indicate the display screen to display the ray. Certainly, the endpoint of the ray may alternatively be the second endpoint. In this case, the ray further passes through the first endpoint.
(2) If the voice instruction is "creating a line with a unidirectional arrow", the processor may create the line with a unidirectional arrow by using the first endpoint as an arrow vertex of the line with a unidirectional arrow and using the second endpoint as an endpoint of the line with a unidirectional arrow on a side away from the arrow, and indicate the display screen to display the line with a unidirectional arrow. Certainly, the arrow vertex of the line with a unidirectional arrow may alternatively be the second endpoint. In this case, the first endpoint is the endpoint of the line with a unidirectional arrow on the side away from the arrow.
(3) If the voice instruction is "creating a circle by using a radius", the processor may create a circle by using a connection line between the first endpoint and the second endpoint as a radius, and indicate the display screen to display the circle. If the processor creates a circle by using the first endpoint as the center of the circle, the second endpoint is a point on the circumference. If the processor creates a circle by using the second endpoint as the center of the circle, the first endpoint is a point on the circumference of the circle.

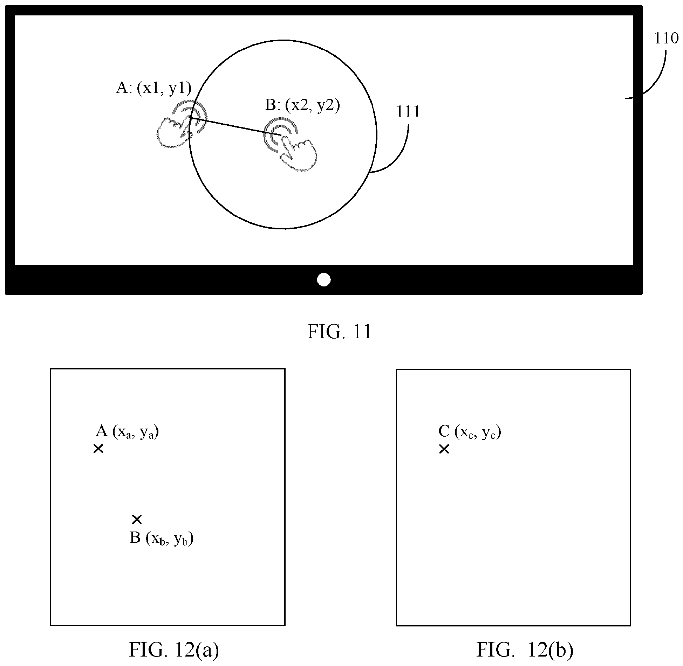

For example, refer to FIG. 11. If the voice instruction received by the processor in a voice monitoring window is "creating a circle by using a radius", in this case, as shown in FIG. 11, the human-computer interaction apparatus determines the contact point A as the first endpoint, and determines the contact point B as the second endpoint. The processor creates, according to the voice instruction, a circle by using the connection line between the first endpoint and the second endpoint as a radius and using the second endpoint as the center of the circle, to obtain a circle 111, and indicates a display screen 110 to display the circle 111. In this case, the first endpoint is a point on the circumference of the circle 111.

The following describes a process in which a processor tracks a contact point.

FIG. 12(a) shows location information of a first contact point (marked as a contact point A) and a second contact point (marked as a contact point B) that are received by the processor in a previous frame of a current frame. Coordinates of A are (xₐ, yₐ), and coordinates of B are (x_{b}, y_{b}). In addition, the processor allocates an ID a to the contact point A, and allocates an ID b to the contact point B. FIG. 12(b) shows a contact point C received by the processor in the current frame. Coordinates of C are (x_{c}, y_{c}).

Herein, the previous frame of the current frame is a frame received by the processor at a previous moment of a current moment or in a previous period of a current period. The current frame is a frame received by the processor at the current moment or in the current period.

Specifically, the process in which the processor tracks the contact point may include a process of allocating an ID to a contact point in the current frame, and a process of determining, based on the ID of the contact point in the current frame, that a contact point in the previous frame of the current frame is missing.

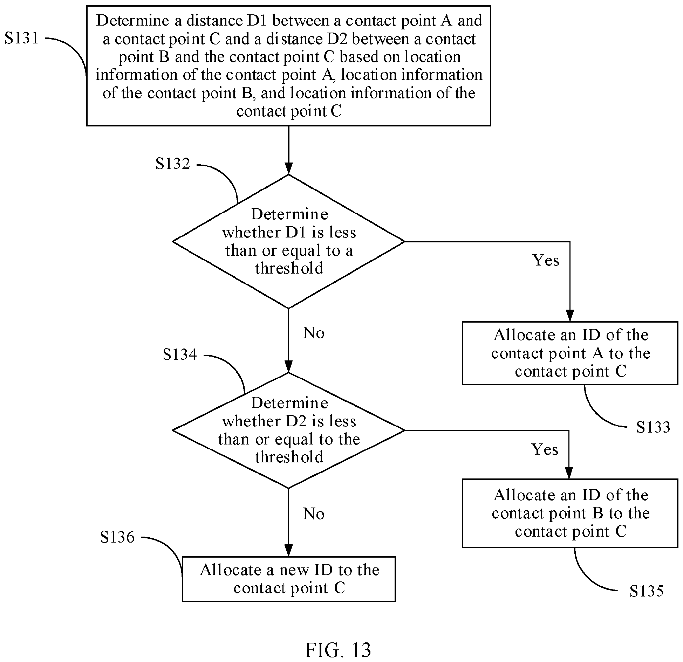

FIG. 13 is a schematic flowchart of allocating the ID to the contact point in the current frame by the processor. The process includes the following steps.

S131: The processor determines a distance D1 between the contact point A and the contact point C and a distance D2 between the contact point B and the contact point C based on location information of the contact point A, location information of the contact point B, and location information of the contact point C.

Specifically, the processor determines the distance D1 between the contact point A and the contact point C and the distance D2 between the contact point B and the contact point C based on the location information of the contact point A and the location information of the contact point B that are in the previous frame and the location information of the contact point C in the current frame.

S132: The processor determines whether D1 is less than or equal to a threshold.

Herein, the threshold may be preset by the processor, and a value of the threshold may be set based on an actual case. This is not specifically limited in this embodiment of this application.

If D1 is less than or equal to the threshold, S133 is performed. If D1 is greater than the threshold, S134 is performed.

In actual application, a touch misoperation may exist. For example, a palm touches a touchscreen, or a finger or a stylus slides in a process of touching the touchscreen. In this case, a distance between a contact point in the current frame and a contact point in the previous frame of the current frame is usually relatively small. In this embodiment of this application, the threshold is set, and a contact point that is generated due to a misoperation in the current frame and a contact point that is in the previous frame of the current frame and whose distance from the contact point is less than or equal to the threshold are determined as a same contact point coordinate tracking sequence. The contact point coordinate tracking sequence shares one ID and corresponds to one touch operation. This helps reduce occurrence of an accidental start or end, of "a voice processing time window determined according to the touch operation", that is caused by the misoperation.

S133: The processor allocates the ID of the contact point A to the contact point C.

The processor allocates the ID of the contact point A to the contact point C, namely, an ID of the contact point C is the ID a. In this case, the contact point A and the contact point C belong to a same contact point coordinate tracking sequence, and an ID of the contact point coordinate tracking sequence is the ID a. In this case, the contact point C is used as the first contact point.

After S133 is performed, the process of allocating the ID to the contact point in the current frame ends.

S134: The processor determines whether D2 is less than or equal to the threshold.

If D2 is less than or equal to the threshold, S135 is performed. If D2 is greater than the threshold, S136 is performed.

S135: The processor allocates the ID of the contact point B to the contact point C.

The processor allocates the ID of the contact point B to the contact point C, namely, the ID of the contact point C is the ID b. In this case, the contact point B and the contact point C belong to a same contact point coordinate tracking sequence, and an ID of the contact point coordinate tracking sequence is the ID b. In this case, the contact point C is used as the second contact point.

After S135 is performed, the process of allocating the ID to the contact point in the current frame ends.

S136: The processor allocates a new ID to the contact point C.

The processor allocates the new ID, for example, an ID c, to the contact point C. In this case, it indicates that the contact point C is a currently emerging contact point. In this case, the contact point C is neither the first contact point nor the second contact point. For example, the contact point C may be a contact point generated by a misoperation, or a moment at which the contact point C appears may be a start point of a next processing time window.

For example, the processor determines that the contact point A (namely, the first contact point) and the contact point B (namely, the second contact point) exist in the current frame. In this case, it may be considered that when a user touches the touchscreen by using a finger, a new contact point C is generated because a palm accidentally touches the touchscreen. In this case, the contact point C is a contact point generated due to a misoperation of the user,

For example, the processor determines that the contact point A (namely, the first contact point) or the contact point B (namely, the second contact point) does not exist in the current frame. In this case, the newly generated contact point C and the contact point B or the contact point A that exists in the current frame generate new overlapping touch duration. To be specific, a touch start moment of the contact point C may be the start point of the next voice processing time window.

According to the contact point tracking method described in S131 to S136, the processor may track contact points of a plurality of consecutive frames, to obtain a coordinate tracking sequence of a plurality of contact points. One contact point coordinate tracking sequence shares one ID, and one contact point ID corresponds to one touch action. Therefore, one contact point tracking sequence may describe a sliding track of one touch operation on the touchscreen.

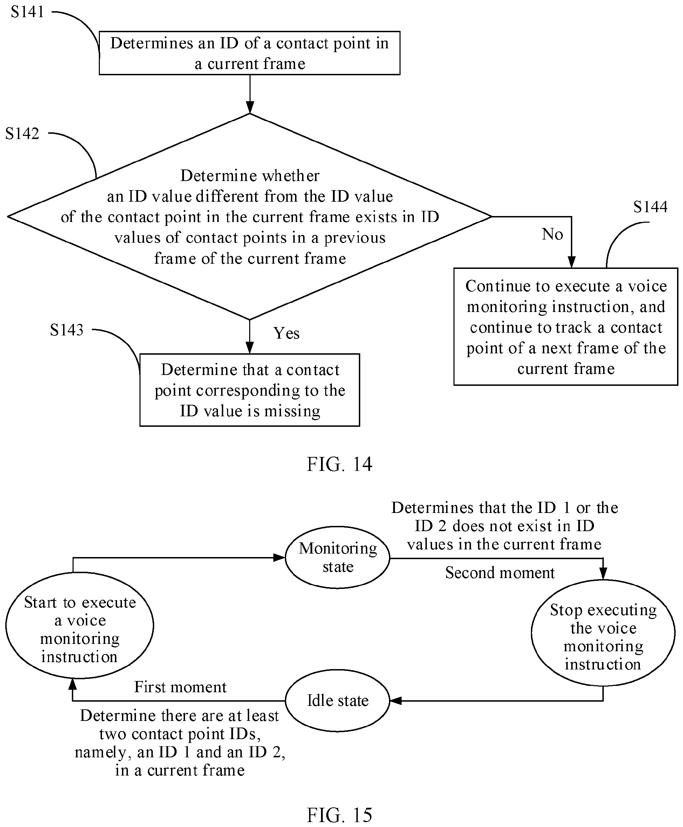

Further, the processor determines, according to the ID of the contact point in the current frame, whether the contact point in the previous frame of the current frame is missing. Referring to FIG. 14, the process of determining whether the contact point in the previous frame of the current frame is missing specifically includes the following steps.

S141: The processor determines the ID of the contact point in the current frame.

Specifically, the processor may determine the ID of the contact point in the current frame by using S131 to S136. Details are not described herein again.

S142: The processor determines whether an ID value different from the ID value of the contact point in the current frame exists in ID values of contact points in the previous frame of the current frame. If yes, S143 is performed. If no, S144 is performed.

The processor compares the ID values of the contact points in the previous frame with ID values of contact points in the current frame one by one, to determine whether the ID value different from the ID value of the contact point in the current frame exists in the ID values of the contact points in the previous frame.

For example, with reference to FIG. 12 and FIG. 13, the IDs of the contact points in the previous frame include the ID a and the ID b, and the processor allocates the ID a to the contact point C in the current frame. In this case, the processor may determine that the ID values of the contact points in the current frame do not include the ID b in the previous frame. In other words, the processor determines that the ID value, namely, the ID b, different from the ID value of the contact point in the current frame exists in the ID values of the contact points in the previous frame.

S143: The processor determines that a contact point corresponding to the ID value is missing.

The processor determines that the contact point corresponding to the ID value that is in the ID values of the contact points in the previous frame of the current frame and that is different from the ID value of the contact point in the current frame is missing. In this case, it indicates that touch duration of a touch operation corresponding to the contact point ends. To be specific, a voice processing time window corresponding to the touch operation ends.

S144: The processor continues to execute a voice monitoring instruction, and continues to track a contact point of a next frame of the current frame.

No ID value different from the ID value of the contact point in the current frame exists in the ID values of the contact points in the previous frame of the current frame. In other words, an ID of the contact point in the previous frame of the current frame still appears in the current frame. In this case, it indicates that none of the contact points in the previous frame of the current frame is missing. To be specific, touch duration of a touch operation corresponding to the contact point in the previous frame of the current frame does not end. In this case, the processor continues to execute the voice monitoring instruction based on the touch operation. In addition, the processor continues to track the contact point of the next frame of the current frame.

In addition, the human-computer interaction method provided in the embodiments of this application can further track a plurality of contact points. If the current frame includes m contact points, in the m contact points, the processor determines that distances between n contact points and one contact point (for example, the contact point A) in the previous frame are all less than the threshold. Herein, m and n are respectively positive integers greater than 0, and m is greater than or equal to n. In this case, the processor determines, from the n contact points in the current frame, a contact point (for example, the contact point C) closest to the contact point A in the previous frame of the current frame. The processor allocates the ID value of the contact point A to the contact point C. In this case, the contact point A and the contact point C belong to a same contact point coordinate tracking sequence, and the contact point coordinate tracking sequence shares one ID. Then, the processor discards n - 1 contact points other than the contact point A in the n contact points in the current frame, or sets the n - 1 contact points to be invalid.

It may be understood that, by using the contact point tracking processes described in S131 to S136 and S141 to S144, the processor may determine a start point and an end point of a voice processing time window, and execute the voice monitoring instruction in the voice processing time window.

Specifically, FIG. 15 shows a relationship between contact point tracking and the voice processing time window. As shown in FIG. 15, in this embodiment of this application, a state in which the processor does not execute the voice monitoring instruction is referred to as an idle state, and a state in which the processor executes the voice monitoring instruction is referred to as a monitoring state. Arrows in FIG. 15 indicate that the processor tracks the contact points in real time.

As shown in FIG. 15, at a first moment, the processor determines, based on a current frame sent by the touchscreen, that there are at least two contact points (for example, the first contact point and the second contact point) in the current frame. The processor allocates an ID 1 to the first contact point, and allocates an ID 2 to the second contact point. In this case, the processor determines that the first moment is the start point of the voice processing time window, and starts to execute the voice monitoring instruction.

At a second moment, the processor determines, based on the current frame sent by the touchscreen, that the ID 1 or the ID 2 does not exist in the ID values corresponding to the contact points in the current frame. If the ID 1 does not exist, the processor determines that the first contact point corresponding to the ID 1 is missing. In this case, it indicates that touch duration of a touch operation corresponding to the first contact point ends. If the ID 2 does not exist, the processor determines that the second contact point corresponding to the ID 2 is missing. In this case, it indicates that duration of a touch operation corresponding to the second contact point ends. Therefore, the processor determines that the second moment is the end point of the voice processing time window, and stops executing the voice monitoring instruction.

In this case, the processor returns to the idle state, and continues to track whether a new contact point appears, to determine a start point of a next voice processing time window.

In actual application, a touch misoperation may exist. For example, a palm touches the touchscreen, or a finger or a stylus slides in a process of touching the touchscreen. According to the contact point tracking method provided in this embodiment of this application, not only the start point and the end point of the voice processing time window can be determined, but also a problem that the voice processing time window accidentally starts or ends due to a touch misoperation can be avoided.

In conclusion, in the human-computer interaction method provided in the embodiments of this application, on one hand, a to-be-executed voice instruction is determined based on overlapping touch duration of multi-point touch. In this way, there is no need to frequently use a wake-up word to wake up the system. This helps enhance user experience in a human-computer interaction process. On the other hand, location information of a to-be-operated object of the voice instruction on the touchscreen is determined based on the multi-point touch. In this way, in a large-screen scenario, a problem of long-distance sliding on a large screen can be alleviated. This helps enhance user experience in the human-computer interaction process.

The foregoing mainly describes the solutions provided in the embodiments of this application from a perspective of the method. To implement the foregoing functions, the human-computer interaction system includes a corresponding hardware structure and/or software module for performing each function. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In the embodiments of this application, the human-computer interaction system may be divided based on the foregoing method examples. Referring to FIG. 1, the human-computer interaction system shown in FIG. 1 may be configured to perform a human-computer interaction method, for example, configured to perform the methods shown in FIG. 4, FIG. 13, and FIG. 14. The touchscreen 13 is configured to receive a first touch operation and a second touch operation, where touch duration of the first touch operation and touch duration of the second touch operation overlap. The processor 11 is configured to receive a voice instruction, where the voice instruction is a voice instruction received within overlapping touch duration of the first touch operation and the second touch operation. The processor 11 is further configured to: in response to the first touch operation and the second touch operation, determine location information of a to-be-operated object of the voice instruction on the touchscreen 13. The processor 11 is further configured to execute the voice instruction based on the location information of the to-be-operated object on the touchscreen 13. For example, with reference to FIG. 4, the touchscreen 13 may be configured to perform S401 and S402, and the processor 11 may be configured to perform S403, S405, and S406.

Optionally, the processor 11 is specifically configured to determine a to-be-operated area of the voice instruction, where the to-be-operated area is an area on the touchscreen 13, and the to-be-operated object is included in the to-be-operated area. The processor 11 is further configured to execute the voice instruction in the to-be-operated area. For example, with reference to FIG. 4, the processor 11 may be configured to perform S405.

Optionally, the processor 11 is specifically configured to: when the voice instruction is used to indicate to select an object, select an object in the to-be-operated area; when the voice instruction is used to indicate to modify attribute information of an object to target attribute information, modify attribute information of an object in the to-be-operated area to the target attribute information; when the voice instruction is used to indicate to delete an object, delete an object in the to-be-operated area; or when the voice instruction is used to indicate to create an object, create an object in the to-be-operated area. For example, with reference to FIG. 4, the processor 11 may be configured to perform S406.

Optionally, the display screen 132 is configured to display the to-be-operated area.

Optionally, the voice instruction is used to indicate to create the to-be-operated object, and the to-be-operated object includes a first endpoint and a second endpoint. The processor 11 is further configured to determine location information of the first endpoint on the touchscreen 13 based on location information of a contact point of the first touch operation, and determine location information of the second endpoint on the touchscreen 13 based on location information of a contact point of the second touch operation. For example, with reference to FIG. 4, the processor 11 may be configured to perform S405.

Optionally, the to-be-operated object includes at least one of the following: a straight line, a line segment, a broken line, a curve, or a polygon.

Optionally, the processor 11 is specifically configured to execute the voice instruction based on the location information of the to-be-operated object on the touchscreen 13 and a sequence of touch start times of the first touch operation and the second touch operation. For example, with reference to FIG. 4, the processor 11 may be configured to perform S406.

Optionally, the processor 11 is specifically configured to: when the voice instruction is used to indicate to create a circle, create the circle based on the sequence of the touch start times of the first touch operation and the second touch operation. A location of a center of the circle is determined based on a location of the contact point of the first touch operation, and a location of a point in a circumference of the circle is determined based on a location of the contact point of the second touch operation. The touch start time of the first touch operation is earlier or later than the touch start time of the second touch operation. For example, with reference to FIG. 4, the processor 11 may be configured to perform S406.

Optionally, the processor 11 is specifically configured to: when the voice instruction is used to indicate to create a line with a unidirectional arrow, create the line with a unidirectional arrow based on the sequence of the touch start times of the first touch operation and the second touch operation. A location of the endpoint pointed to by the arrow in the line is determined based on a location of the contact point of the first touch operation, and a location of the endpoint not pointed to by the arrow in the line is determined based on a location of the contact point of the second touch operation. The touch start time of the first touch operation is earlier or later than the touch start time of the second touch operation. For example, with reference to FIG. 4, the processor 11 may be configured to perform S406.

Optionally, the voice collector 14 may be configured to collect a voice instruction.

For specific descriptions of the foregoing optional manners, refer to the foregoing method embodiments. Details are not described herein again. In addition, for explanations of any human-computer interaction system provided above and descriptions of beneficial effects, refer to the foregoing corresponding method embodiments. Details are not described again.

In addition, in the embodiments of this application, the processor or the computer device including the processor may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in the embodiments of this application, division into the modules is an example, and is merely logical function division. In an actual implementation, another division manner may be used.

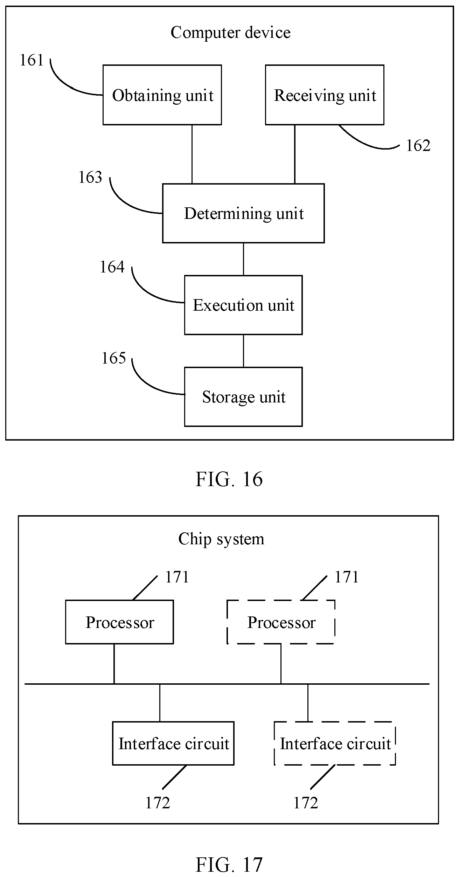

FIG. 16 is a schematic structural diagram of a processor or a computer device according to an embodiment of this application. The processor or the computer device is configured to perform the foregoing human-computer interaction methods, for example, configured to perform the methods shown in FIG. 4, FIG. 13, FIG. 14, and FIG. 15. The processor or the computer device may include an obtaining unit 161, a receiving unit 162, a determining unit 163, and an execution unit 164.

The obtaining unit 161 is configured to obtain location information of a first contact point and location information of a second contact point. Herein, the first contact point is a contact point based on a first touch operation, the second contact point is a contact point based on a second touch operation, and touch duration of the first touch operation and touch duration of the second touch operation overlap. The receiving unit 162 is configured to receive a voice instruction, where the voice instruction is a voice instruction received within overlapping touch duration of the first touch operation and the second touch operation. The determining unit 163 is configured to: in response to the obtaining operation of the obtaining unit 161, determine location information of a to-be-operated object of the voice instruction. The execution unit 164 is configured to execute the voice instruction based on the location information that is of the to-be-operated object and that is determined by the determining unit 163. For example, with reference to FIG. 4, the obtaining unit 161 may be configured to perform S403, the determining unit 163 may be configured to perform S405, and the execution unit 164 may be configured to perform S406.

Optionally, the determining unit 163 is specifically configured to determine a to-be-operated area of the voice instruction, where the to-be-operated object is included in the to-be-operated area. The execution unit 164 is specifically configured to execute the voice instruction in the to-be-operated area determined by the determining unit 163. For example, with reference to FIG. 4, the determining unit 163 may be configured to perform S405.

Optionally, the execution unit 164 is specifically configured to: when the voice instruction is used to indicate to select an object, select an object in the to-be-operated area; when the voice instruction is used to indicate to modify attribute information of an object to target attribute information, modify attribute information of an object in the to-be-operated area to the target attribute information; when the voice instruction is used to indicate to delete an object, delete an object in the to-be-operated area; or when the voice instruction is used to indicate to create an object, create an object in the to-be-operated area. For example, with reference to FIG. 4, the execution unit 164 may be configured to perform S406.

Optionally, the voice instruction is used to indicate to create the to-be-operated object, and the to-be-operated object includes a first endpoint and a second endpoint. The determining unit 163 is specifically configured to: determine location information of the first endpoint based on the location information of the first contact point; and determine location information of the second endpoint based on the location information of the second contact point. For example, with reference to FIG. 4, the determining unit 163 may be configured to perform S405.

Optionally, the execution unit 164 is specifically configured to execute the voice instruction based on the location information of the to-be-operated object and a sequence of touch start times of the first touch operation and the second touch operation. For example, with reference to FIG. 4, the execution unit 164 may be configured to perform S406.

Optionally, the execution unit 164 is specifically configured to: when the voice instruction is used to indicate to create a circle, create the circle based on the sequence of the touch start times of the first touch operation and the second touch operation. A location of the center of the circle is determined based on a location of the contact point of the first touch operation, and a location of a point in the circumference of the circle is determined based on a location of the contact point of the second touch operation. The touch start time of the first touch operation is earlier or later than the touch start time of the second touch operation. For example, with reference to FIG. 4, the execution unit 164 may be configured to perform S406.

Optionally, the execution unit 164 is specifically configured to: when the voice instruction is used to indicate to create a line with a unidirectional arrow, create the line with a unidirectional arrow based on the sequence of the touch start times of the first touch operation and the second touch operation. Herein, a location of the endpoint pointed to by the arrow in the line is determined based on a location of the contact point of the first touch operation, and a location of the endpoint not pointed to by the arrow in the line is determined based on a location of the contact point of the second touch operation. The touch start time of the first touch operation is earlier or later than the touch start time of the second touch operation. For example, with reference to FIG. 4, the execution unit 164 may be configured to perform S406.

Certainly, the computer device provided in this embodiment of this application includes but is not limited to the units. For example, the computer device may further include a storage unit 165. The storage unit 165 may be configured to store program code of the computer device.

In an example, with reference to FIG. 1, functions implemented by the obtaining unit 161, the receiving unit 162, the determining unit 163, and the execution unit 164 in the computer device are the same as functions of the processor 11 in FIG. 1. A function implemented by the storage unit 165 is the same as a function of the memory 12 in FIG. 1.

For specific descriptions of the optional manners, refer to the method embodiments. Details are not described herein again. In addition, for explanations of any processor or computer device provided above and descriptions of beneficial effects, refer to the corresponding method embodiments. Details are not described again.

An embodiment of this application further provides a chip system. As shown in FIG. 17, the chip system includes at least one processor 171 and at least one interface circuit 172. The processor 171 and the interface circuit 172 may be interconnected through a line. For example, the interface circuit 172 may be configured to receive a signal from another apparatus (for example, a memory of a human-computer interaction system or a memory of a computer device). For another example, the interface circuit 172 may be configured to send a signal to another apparatus (for example, the processor 171). For example, the interface circuit 172 may read an instruction stored in the memory, and send the instruction to the processor 171. When the instruction is executed by the processor 171, the human-computer interaction system or the computer device may be enabled to perform the steps in the embodiments. Certainly, the chip system may further include another discrete device. This is not specifically limited in this embodiment of this application.

Another embodiment of this application further provides a computer-readable storage medium, and the computer-readable storage medium stores an instruction. When the instruction is run on a human-computer interaction system or a computer device, the human-computer interaction system or the computer device performs the steps performed by the human-computer interaction system or the computer device in the method procedures shown in the foregoing method embodiments.

In some embodiments, the disclosed method may be implemented as a computer program instruction encoded in a machine-readable format on a computer-readable storage medium or encoded on another non-transitory medium or product.

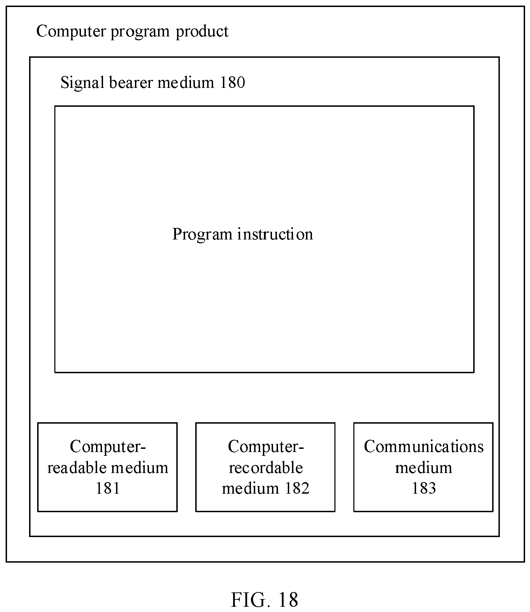

FIG. 18 schematically shows a conceptual partial view of a computer program product according to an embodiment of this application. The computer program product includes a computer program used to execute a computer process on a computing device.

In an embodiment, the computer program product is provided by using a signal bearer medium 180. The signal bearer medium 180 may include one or more program instructions. When the program instructions are run by one or more processors, the functions or some of the functions described for FIG. 4 may be provided. Therefore, for example, one or more features of S401 to S406 in FIG. 4 may be borne by one or more instructions associated with the signal bearer medium 180. In addition, the program instructions in FIG. 18 also described as example instructions.

In some examples, the signal bearer medium 180 may include a computer-readable medium 181, for example, but not limited to, a hard disk drive, a compact disc (CD), a digital video disc (DVD), a digital tape, a memory, a read-only memory (read-only memory, ROM), a random access memory (random access memory, RAM), or the like.

In some implementations, the signal bearer medium 180 may include a computer-recordable medium 182, for example, but not limited to, a memory, a read/write (R/W) CD, an R/W DVD, and the like.

In some implementations, the signal bearer medium 180 may include a communications medium 183, for example, but is not limited to a digital and/or analog communications medium (for example, an optical fiber cable, a waveguide, a wired communications link, or a wireless communications link).

The signal bearer medium 180 may be conveyed by a wireless-form communications medium 183 (for example, a wireless communications medium that complies with the IEEE 802.11 standard or another transmission protocol). The one or more program instructions may be, for example, one or more computer-executable instructions or one or more logic implementation instructions.

In some examples, for example, the human-computer interaction system or the computer device described for FIG. 4 may be configured to provide various operations, functions, or actions in response to one or more program instructions in the computer-readable medium 181, the computer-recorded medium 182, and/or the communications medium 183.

It should be understood that the arrangement described herein is merely for purpose of an example. Thus, a person skilled in the art appreciates that another arrangement and another element (for example, a machine, an interface, a function, a sequence, and a group of functions) can be used to replace the arrangement, and some elements may be omitted together depending on a desired result. In addition, many of the described elements are functional entities that can be implemented as discrete or distributed components, or implemented in any suitable combination and at any suitable location in combination with another component.

All or some of the foregoing embodiments may be implemented by using software, hardware, firmware, or any combination thereof. When a software program is used to implement the embodiments, the embodiments may be implemented all or partially in a form of a computer program product. The computer program product includes one or more computer instructions. When the computer-executable instructions are loaded and executed on a computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

The foregoing descriptions are merely specific implementations of this application. Any variation or replacement readily figured out by a person skilled in the art based on the specific implementations provided in this application shall fall within the protection scope of this application.

## Claims

1. A human-computer interaction method, applied to a human-computer interaction system, wherein the human-computer interaction system comprises a touchscreen, and the method comprises:
receiving a first touch operation and a second touch operation, wherein touch duration of the first touch operation and touch duration of the second touch operation overlap;
receiving a voice instruction, wherein the voice instruction is a voice instruction received within overlapping touch duration of the first touch operation and the second touch operation;
in response to the first touch operation and the second touch operation, determining location information of a to-be-operated object of the voice instruction on the touchscreen; and
executing the voice instruction based on the location information of the to-be-operated object on the touchscreen.

2. The method according to claim 1, wherein the determining location information of a to-be-operated object of the voice instruction on the touchscreen comprises:
determining a to-be-operated area of the voice instruction, wherein the to-be-operated area is an area on the touchscreen, and the to-be-operated object is comprised in the to-be-operated area; and
the executing the voice instruction based on the location information of the to-be-operated object on the touchscreen comprises:
executing the voice instruction in the to-be-operated area.

3. The method according to claim 2, wherein the executing the voice instruction in the to-be-operated area comprises:
when the voice instruction is used to indicate to select an object, selecting an object in the to-be-operated area;
when the voice instruction is used to indicate to modify attribute information of an object to target attribute information, modifying attribute information of an object in the to-be-operated area to the target attribute information;
when the voice instruction is used to indicate to delete an object, delete an object in the to-be-operated area; or
when the voice instruction is used to indicate to create an object, creating an object in the to-be-operated area.

4. The method according to claim 2 or 3, wherein the method further comprises:
displaying the to-be-operated area.

5. The method according to claim 1, wherein the voice instruction is used to indicate to create the to-be-operated object, the to-be-operated object comprises a first endpoint and a second endpoint, and the determining location information of a to-be-operated object of the voice instruction on the touchscreen comprises:
determining location information of the first endpoint on the touchscreen based on location information of a contact point of the first touch operation; and
determining location information of the second endpoint on the touchscreen based on location information of a contact point of the second touch operation.

6. The method according to claim 5, wherein the to-be-operated object comprises at least one of the following: a straight line, a line segment, a broken line, a curve, or a polygon.

7. The method according to claim 1, wherein the executing the voice instruction based on the location information of the to-be-operated object on the touchscreen comprises:
executing the voice instruction based on the location information of the to-be-operated object on the touchscreen and a sequence of touch start times of the first touch operation and the second touch operation.

8. The method according to claim 7, wherein the executing the voice instruction based on the location information of the to-be-operated object on the touchscreen and a sequence of touch start times of the first touch operation and the second touch operation comprises:
when the voice instruction is used to indicate to create a circle, creating the circle based on the sequence of the touch start times of the first touch operation and the second touch operation, wherein
a location of a center of the circle is determined based on a location of a contact point of the first touch operation, and a location of a point in a circumference of the circle is determined based on a location of a contact point of the second touch operation, wherein the touch start time of the first touch operation is earlier or later than the touch start time of the second touch operation.

9. The method according to claim 7, wherein the executing the voice instruction based on the location information of the to-be-operated object on the touchscreen and a sequence of touch start times of the first touch operation and the second touch operation comprises:
when the voice instruction is used to indicate to create a line with a unidirectional arrow, creating the line with a unidirectional arrow based on the sequence of the touch start times of the first touch operation and the second touch operation, wherein
a location of an endpoint pointed to by the arrow in the line is determined based on a location of a contact point of the first touch operation, and a location of an endpoint not pointed to by the arrow in the line is determined based on a location of a contact point of the second touch operation, wherein the touch start time of the first touch operation is earlier or later than the touch start time of the second touch operation.

10. A human-computer interaction method, applied to a computer device, wherein the method comprises:
obtaining location information of a first contact point and location information of a second contact point, wherein the first contact point is a contact point based on a first touch operation, the second contact point is a contact point based on a second touch operation, and touch duration of the first touch operation and touch duration of the second touch operation overlap;
receiving a voice instruction, wherein the voice instruction is a voice instruction received within overlapping touch duration of the first touch operation and the second touch operation;
in response to the obtaining operation, determining location information of a to-be-operated object of the voice instruction; and
executing the voice instruction based on the location information of the to-be-operated object.

11. The method according to claim 10, wherein the determining location information of a to-be-operated object of the voice instruction comprises:
determining a to-be-operated area of the voice instruction, wherein the to-be-operated object is comprised in the to-be-operated area; and
the executing the voice instruction based on the location information of the to-be-operated object comprises:
executing the voice instruction in the to-be-operated area.

12. The method according to claim 11, wherein the executing the voice instruction in the to-be-operated area comprises:
when the voice instruction is used to indicate to select an object, selecting an object in the to-be-operated area;
when the voice instruction is used to indicate to modify attribute information of an object to target attribute information, modifying attribute information of an object in the to-be-operated area to the target attribute information;
when the voice instruction is used to indicate to delete an object, deleting an object in the to-be-operated area; or
when the voice instruction is used to indicate to create an object, creating an object in the to-be-operated area.

13. The method according to claim 10, wherein the voice instruction is used to indicate to create the to-be-operated object, the to-be-operated object comprises a first endpoint and a second endpoint, and the determining location information of a to-be-operated object of the voice instruction comprises:
determining location information of the first endpoint based on the location information of the first contact point; and
determining location information of the second endpoint based on the location information of the second contact point.

14. The method according to claim 10, wherein the executing the voice instruction based on the location information of the to-be-operated object comprises:
executing the voice instruction based on the location information of the to-be-operated object and a sequence of touch start times of the first touch operation and the second touch operation.

15. The method according to claim 14, wherein the executing the voice instruction based on the location information of the to-be-operated object and a sequence of touch start times of the first touch operation and the second touch operation comprises:
when the voice instruction is used to indicate to create a circle, creating the circle based on the sequence of the touch start times of the first touch operation and the second touch operation, wherein
a location of a center of the circle is determined based on a location of the contact point of the first touch operation, and a location of a point in a circumference of the circle is determined based on a location of the contact point of the second touch operation, wherein the touch start time of the first touch operation is earlier or later than the touch start time of the second touch operation.

16. The method according to claim 14, wherein the executing the voice instruction based on the location information of the to-be-operated object and a sequence of touch start times of the first touch operation and the second touch operation comprises:
when the voice instruction is used to indicate to create a line with a unidirectional arrow, creating the line with a unidirectional arrow based on the sequence of the touch start times of the first touch operation and the second touch operation, wherein
a location of an endpoint pointed to by the arrow in the line is determined based on a location of the contact point of the first touch operation, and a location of an endpoint not pointed to by the arrow in the line is determined based on a location of the contact point of the second touch operation, wherein the touch start time of the first touch operation is earlier or later than the touch start time of the second touch operation.

17. A human-computer interaction system, wherein the human-computer interaction system comprises a touchscreen and a processor, wherein
the touchscreen is configured to receive a first touch operation and a second touch operation, and touch duration of the first touch operation and touch duration of the second touch operation overlap;
the processor is configured to receive a voice instruction, wherein the voice instruction is a voice instruction received within overlapping touch duration of the first touch operation and the second touch operation; and
the processor is further configured to: in response to the first touch operation and the second touch operation, determine location information of a to-be-operated object of the voice instruction on the touchscreen; and execute the voice instruction based on the location information of the to-be-operated object on the touchscreen.

18. The system according to claim 17, wherein
the processor is specifically configured to: determine a to-be-operated area of the voice instruction, wherein the to-be-operated area is an area on the touchscreen, and the to-be-operated object is comprised in the to-be-operated area; and execute the voice instruction in the to-be-operated area.

19. The system according to claim 18, wherein the processor is specifically configured to:
when the voice instruction is used to indicate to select an object, select an object in the to-be-operated area;
when the voice instruction is used to indicate to modify attribute information of an object to target attribute information, modify attribute information of an object in the to-be-operated area to the target attribute information;
when the voice instruction is used to indicate to delete an object, delete an object in the to-be-operated area; or
when the voice instruction is used to indicate to create an object, create an object in the to-be-operated area.

20. The system according to claim 18 or 19, wherein the system further comprises a display screen, wherein the display screen is configured to display the to-be-operated area.

21. The system according to claim 17, wherein the voice instruction is used to indicate to create the to-be-operated object, and the to-be-operated object comprises a first endpoint and a second endpoint; and
the processor is further configured to: determine location information of the first endpoint on the touchscreen based on location information of a contact point of the first touch operation; and determine location information of the second endpoint on the touchscreen based on location information of a contact point of the second touch operation.

22. The system according to claim 21, wherein the to-be-operated object comprises at least one of the following: a straight line, a line segment, a broken line, a curve, or a polygon.

23. The system according to claim 17, wherein
the processor is specifically configured to execute the voice instruction based on the location information of the to-be-operated object on the touchscreen and a sequence of touch start times of the first touch operation and the second touch operation.

24. The system according to claim 23, wherein
the processor is specifically configured to: when the voice instruction is used to indicate to create a circle, create the circle based on the sequence of the touch start times of the first touch operation and the second touch operation; and
a location of a center of the circle is determined based on a location of a contact point of the first touch operation, and a location of a point in a circumference of the circle is determined based on a location of a contact point of the second touch operation, wherein the touch start time of the first touch operation is earlier or later than the touch start time of the second touch operation.

25. The system according to claim 23, wherein
the processor is specifically configured to: when the voice instruction is used to indicate to create a line with a unidirectional arrow, create the line with a unidirectional arrow based on the sequence of the touch start times of the first touch operation and the second touch operation; and
a location of an endpoint pointed to by the arrow in the line is determined based on a location of a contact point of the first touch operation, and a location of an endpoint not pointed to by the arrow in the line is determined based on a location of a contact point of the second touch operation, wherein the touch start time of the first touch operation is earlier or later than the touch start time of the second touch operation.

26. A computer device, wherein the computer device comprises an obtaining unit, a receiving unit, a determining unit, and an execution unit, wherein
the obtaining unit is configured to obtain location information of a first contact point and location information of a second contact point, the first contact point is a contact point based on a first touch operation, the second contact point is a contact point based on a second touch operation, and touch duration of the first touch operation and touch duration of the second touch operation overlap;
the receiving unit is configured to receive a voice instruction, and the voice instruction is a voice instruction received within overlapping touch duration of the first touch operation and the second touch operation;
the determining unit is configured to: in response to the obtaining operation of the obtaining unit, determine location information of a to-be-operated object of the voice instruction; and
the execution unit is configured to execute the voice instruction based on the location information that is of the to-be-operated object and that is determined by the determining unit.

27. The computer device according to claim 26, wherein
the determining unit is specifically configured to determine a to-be-operated area of the voice instruction, and the to-be-operated object is comprised in the to-be-operated area; and
the execution unit is specifically configured to execute the voice instruction in the to-be-operated area determined by the determining unit.

28. The computer device according to claim 27, wherein the execution unit is specifically configured to:
when the voice instruction is used to indicate to select an object, select an object in the to-be-operated area;
when the voice instruction is used to indicate to modify attribute information of an object to target attribute information, modify attribute information of an object in the to-be-operated area to the target attribute information;
when the voice instruction is used to indicate to delete an object, delete an object in the to-be-operated area; or
when the voice instruction is used to indicate to create an object, create an object in the to-be-operated area.

29. The computer device according to claim 26, wherein the voice instruction is used to indicate to create the to-be-operated object, and the to-be-operated object comprises a first endpoint and a second endpoint; and
the determining unit is specifically configured to: determine location information of the first endpoint based on the location information of the first contact point; and determine location information of the second endpoint based on the location information of the second contact point.

30. The computer device according to claim 26, wherein
the execution unit is specifically configured to execute the voice instruction based on the location information of the to-be-operated object and a sequence of touch start times of the first touch operation and the second touch operation.

31. The computer device according to claim 30, wherein
the execution unit is specifically configured to: when the voice instruction is used to indicate to create a circle, create the circle based on the sequence of the touch start times of the first touch operation and the second touch operation; and
a location of a center of the circle is determined based on a location of the contact point of the first touch operation, and a location of a point in a circumference of the circle is determined based on a location of the contact point of the second touch operation, wherein the touch start time of the first touch operation is earlier or later than the touch start time of the second touch operation.

32. The computer device according to claim 30, wherein
the execution unit is specifically configured to: when the voice instruction is used to indicate to create a line with a unidirectional arrow, create the line with a unidirectional arrow based on the sequence of the touch start times of the first touch operation and the second touch operation; and
a location of an endpoint pointed to by the arrow in the line is determined based on a location of the contact point of the first touch operation, and a location of an endpoint not pointed to by the arrow in the line is determined based on a location of the contact point of the second touch operation, wherein the touch start time of the first touch operation is earlier or later than the touch start time of the second touch operation.

33. A computer device, comprising a memory and one or more processors, wherein the memory is coupled to the processor; and
the memory is configured to store computer program code, the computer program code comprises a computer instruction, and when the computer instruction is executed by the computer device, the computer device is enabled to perform the human-computer interaction method according to any one of claims 10 to 16.

34. A chip system, wherein the chip system is applied to a human-computer interaction system, and the chip system comprises one or more interface circuits and one or more processors, wherein
the interface circuit and the processor are interconnected through a line, the interface circuit is configured to receive a signal from a memory of the human-computer interaction system, and send the signal to the processor, the signal comprises a computer instruction stored in the memory, and when the processor executes the computer instruction, the human-computer interaction system performs the human-computer interaction method according to any one of claims 1 to 9.

35. A chip system, wherein the chip system is applied to a computer device, and the chip system comprises one or more interface circuits and one or more processors, wherein
the interface circuit and the processor are interconnected through a line, the interface circuit is configured to receive a signal from a memory of the computer device, and send the signal to the processor, the signal comprises a computer instruction stored in the memory, and when the processor executes the computer instruction, the computer device performs the human-computer interaction method according to any one of claims 10 to 16.

36. A computer-readable storage medium, comprising a computer instruction, wherein when the computer instruction is run on a human-computer interaction system, the human-computer interaction system is enabled to implement the human-computer interaction method according to any one of claims 1 to 9.

37. A computer-readable storage medium, comprising a computer instruction, wherein when the computer instruction is run on a computer device, the computer device is enabled to implement the human-computer interaction method according to any one of claims 10 to 16.
